# EUROPÄISCHE PATENTSCHRIFT

(11) **EP 3 739 235 B1**
(45) Veröffentlichungstag und Bekanntmachung des Hinweises auf die Patenterteilung: **30.10.2024**
(21) Anmeldenummer: 20167890.1
(22) Anmeldetag: 03.04.2020
(51) Int. Cl.: F16F 9/512

(54) **HYDRAULISCHER STOSSDÄMPFER**
HYDRAULIC SHOCK ABSORBER
AMORTISSEUR HYDRAULIQUE

(30) Priorität: 30.04.2019 DE 102019206245
(43) Veröffentlichungstag der Anmeldung: 18.11.2020
(73) Patentinhaber: Kranz, Rüdiger, 73770 Denkendorf (DE)
(72) Erfinder: Kranz, Rüdiger, 73770 Denkendorf (DE)
(74) Vertreter: Patentanwälte Magenbauer & Kollegen Partnerschaft mbB

(56) Entgegenhaltungen:
- DE-T2- 60 217 556
- US-A1- 2004 251 099

## Beschreibung

Die Erfindung betrifft einen hydraulischen Stoßdämpfer umfassend ein Gehäuse und eine Dämpfereinheit, wobei die Dämpfereinheit in Achsrichtung einer Dämpfereinheitmittelachse relativ zum Gehäuse beweglich ist und einen an einer Kolbenstange angeordneten Kolben aufweist, der das Gehäuse in einen ersten und einen zweiten mit einem Dämpfungsfluid gefüllten Arbeitsraum unterteilt.

Hydraulische Stoßdämpfer sind seit langem Stand der Technik und umfassen im Wesentlichen eine relativ zu einem Gehäuse bewegliche Dämpfereinheit.

Die DE 602 17 556 T2 offenbart einen hydraulischen Stoßdämpfer für Kraftfahrzeuge, der eine zylindrische Kammer umfasst, die an einem Ende geschlossen ist und in der axial gleitend ein Kolbenelement geführt ist, das von einer Kolbenstange getragen wird und das an seiner Umfangsoberfläche ein umgebendes, ungeschlitztes elastisches Ringelement trägt, wobei die Umfangsoberfläche des Kolbenelements konisch in eine Richtung, von dem Ende der geschlossenen Kammer weg, konvergiert, und die innere Oberfläche des Ringelements ebenfalls in der gleichen Richtung konisch konvergiert, wobei das Ringelement des Weiteren axial verschiebbar an dem Kolbenelement montiert ist zwischen einem ersten festen Anschlag an dem Ende des Elements, das zu dem geschlossenen Ende der Kammer am nächsten ist und einem zweiten festen Anschlag an dem Kolbenelement in einem Abstand von dem ersten Anschlag, welcher die axiale Länge des Ringelements überschreitet.

Nachteilig an der vorgenannten technischen Lösung ist, dass die zueinander unterschiedliche Konizität der Umfangsoberfläche des Kolbenelement und der inneren Oberfläche des Ringelements für eine gute Stoßdämpfung aufeinander abgestimmt sein müssen und somit ein großer Aufwand für Konstruktion und Fertigung der einzelnen Bauteile zu betreiben ist.

Die US-amerikanische Patentanmeldung US 2004/0251099 A1 offenbart einen Stoßdämpfer mit einer längs einer Mittel-Längs-Achse angeordneten Kolbenstange, die aus einem Ende eines Gehäuses durch eine Führungs- und Dichtungseinheit herausgeführt ist. Eine Kolben-Baugruppe am im Gehäuse befindlichen Ende der Kolbenstange unterteilt den Innenraum des Gehäuses in zwei Gehäuse-Teilräume. Ein Druck-Kolbenteil und ein Zug-Kolbenteil der Kolben-Baugruppe weisen beabstandet zu ihren jeweiligen Stirnwänden jeweils eine elastisch deformierbare Ventilscheibe auf. Zwischen diesen hat die Kolben-Baugruppe einen Ringkolben, der relativ zur Kolbenstange längs der Achse zwischen den Ventilscheiben derart beweglich ist, dass durch eine über die Anlage des Ringkolbens an einer der Ventilscheiben, vermittelte Deformation der Ventilscheibe diese so am ihr zugeordneten Kolbenteil anliegt, dass ein Bypass-Kanal zwischen den Teil-Gehäuseräumen zumindest verengt wird. Eine weitere Ventil-Baugruppe hat einen gegen einen Ventilsitz 85 vorgespannten elastischen Ventilkörper sowie einen zwei Gehäuse-Teilräume, die von der weiteren Ventil-Baugruppe unterteilt werden, verbindenden Durchgangskanal, der in einer Blockierstellung der Ventil-Baugruppe vom Ventilkörper verschlossen ist. Ein derartiger Stoßdämpfer kann z. B. zur Dämpfung der Einklappbewegung eines Fahrzeugsitzes eingesetzt werden.

Aufgabe der Erfindung ist es daher die aus dem Stand der Technik bekannten Nachteile zu überwinden und einen hydraulischen Stoßdämpfer bereitzustellen, der ein gutes Ansprechverhalten für die Stoßdämpfung zeigt.

Diese Aufgabe wird bei einem hydraulischen Stoßdämpfer der eingangs genannten Art dadurch gelöst, dass der Kolben eine ein eine Vielzahl an zur Verbindung des ersten und des zweiten Arbeitsraums geeigneten Kolbengliedströmungskanälen aufweisendes und bezüglich der Kolbenstange feststehendes Kolbenglied und einen in Achsrichtung der Dämpfereinheitmittelachse verschiebbar koaxial auf dem Kolbenglied angeordneten eine Kolbenringinnenmantelfläche aufweisenden Kolbenring umfassende Kolbeneinheit aufweist, wobei axial beidseits der des eine Kolbengliedaußenmantelfläche aufweisenden Kolbenglieds umfassenden Kolbeneinheit je eine über Druckplattenströmungskanäle verfügende Druckplatte angeordnet ist, die durch eine Federkraft federnd gegen die Kolbeneinheit vorgespannt ist, sodass der eine Kolbenringaußenmantelfläche aufweisende Kolbenring zwischen den Druckplatten angeordnet ist, und wobei die Druckplatten radial so bemessen sind, dass eine den Druckplatten jeweils zugewandte Kolbenringstirnfläche radial über die zugeordnete Druckplatte übersteht, derart, dass im Betriebszustand der Kolbenring der Kolbeneinheit durch das auf die eine Kolbenringstirnfläche drückende Dämpfungsfluid verschiebbar ist und die jenseitige Druckplatte durch die Verschiebung des Kolbenrings gegen die Federkraft ausgelenkt wird, wodurch durch die Kolbengliedströmungskanäle und die Druckplattenströmungskanäle der jenseitigen Druckplatte hindurch ein Strömungsweg zum gedrosselten Überströmen des Dämpfungsfluids zwischen den beiden Arbeitsräumen freigebbar ist.

Ein derartig ausgebildeter hydraulischer Stoßdämpfer weist im Vergleich zu anderen hydraulischen Stoßdämpfern ein verbessertes Ansprech- und/oder Dämpfungsverhalten auf. Zudem zeigt der erfindungsgemäße hydraulische Stoßdämpfer aufgrund einer höheren Progression keinen Durchschlag.

Weitere vorteilhafte Ausgestaltung des bevorzugten hydraulischen Stoßdämpfers sind in den Unteransprüchen dargelegt.

Nach einer vorteilhaften Fortbildung des hydraulischen Stoßdämpfers ist axial beidseits der des eine Kolbengliedaußenmantelfläche aufweisenden Kolbenglieds umfassenden Kolbeneinheit je eine über Druckplattenströmungskanäle verfügende Druckplatte angeordnet, die durch eine Federkraft federnd gegen das Kolbenglied vorgespannt ist. Ist die Druckplatte nur gegen das Kolbenglied vorgespannt, besteht die Möglichkeit, dass der Kolbenring über ein axiales Spiel gegenüber dem Kolbenglied verfügt. Vorteilhafterweise ergeben sich hierdurch Vorteile bei einer durch eine Temperaturänderung bedingten Viskositätsänderung des Dämpfungsfluids.

Bevorzugt ist der Kolbenring mehrteilig ausbildbar oder ausgebildet. Besonders bevorzugt weist der Kolbenring einen eine Kolbenstützringinnenmantelfläche und eine Kolbenstützringaußenmantelfläche aufweisenden Kolbenstützring und einen eine Kolbendichtringinnenmantelfläche und eine Kolbendichtringaußenmantelfläche aufweisenden Kolbendichtring auf. Ganz besonders bevorzugt ist in einer in der Kolbenstützringaußenmantelfläche oder in der Kolbendichtringinnenmantelfläche ausgebildeten Kolbenringnut ein Kolbenringdichtungselement zur Abdichtung zwischen Kolbenstützring und Kolbendichtring anordenbar oder angeordnet. Die Mehrteiligkeit des Kolbenrings verbessert die Anpassbarkeit des Kolbenrings an die Abmessungen der den Kolbenring umgebenden Bauteile, wie Gehäuse und Kolbenglied.

Des Weiteren ist eine innere Kolbenstützringaußenmantelfläche gegenüber einer äußeren Kolbenstützringaußenmantelfläche zurückversetzt ausgebildet, sodass sich ein Kolbendichtringaufnahmeraum aufspannt, in dem der Kolbendichtring anordenbar oder angeordnet ist. Vorteilhafterweise weist der Kolbendichtring eine Wandung auf, wobei die Wandung eine Wandstärke besitzt, sodass der Kolbenring durch die zueinander angeordnete äußere Kolbenstützringaußenmantelfläche und die Kolbendichtringaußenmantelfläche eine ebene Kolbenringaußenmantelfläche ausbildet.

Überdies ist in einer bevorzugten Fortbildung des hydraulischen Stoßdämpfers die Kolbendichtringaußenmantelfläche oder die Kolbenringaußenmantelfläche zur Abdichtung gegenüber dem Gehäuse mit einem Dichtungsmaterial beschichtet. In der mehrteiligen Ausgestaltung des Kolbenrings bildet die Kolbendichtringaußenmantelfläche zumindest einen Teil der Kolbenringaußenmantelfläche aus. Bevorzugt ist hierbei das Dichtungsmaterial Polytetraflourethylen (PTFE), polyflourierte Alkylverbindungen (PFA), Fluorethylen-Propylen (FEP), Ethylen-Tetrafluorethylen-Copolymer (ETFE) und/oder Polyvinylidenfluorid (PVDF). Durch eine gleitführende Dichtung ist der koaxial auf dem Kolbenglied angeordnete Kolbenring optimal auf diesem verschiebbar zwischen dem Kolbenglied und dem Gehäuse angeordnet. Die Abnutzung der Dichtung im Betrieb des hydraulischen Stoßdämpfers ist zudem sehr gering, was zu einer erhöhten Lebensdauer des hydraulischen Stoßdämpfers führt.

Gemäß einer zusätzlichen Ausgestaltung des erfindungsgemäßen hydraulischen Stoßdämpfers ist eine in der Kolbengliedaußenmantelfläche oder in der Kolbenringinnenmantelfläche ausgebildete Kolbengliednut ein Kolbenglieddichtungselement zur Abdichtung zwischen Kolbenglied und Kolbenring angeordnet. In einer mehrteiligen Ausbildung des Kolbenrings ist bevorzugt in der Kolbengliedaußenmantelfläche oder in der Kolbenstützringinnenmantelfläche ausgebildeten Kolbengliednut ein Kolbenglieddichtungselement zur Abdichtung zwischen Kolbenglied und Kolbenstützring angeordnet. Der Einbau des Kolbenglieddichtungselements und des Kolbenringdichtungselements erhöht die Dichtigkeit zwischen den einzelnen Bauteilen der Kolbeneinheit und verbessert somit das Dämpfungsverhalten des hydraulischen Stoßdämpfers.

Vorteilhafterweise sind die Kolbengliedströmungskanäle in Umfangsrichtung um die Dämpfereinheitmittelachse gleichverteilt angeordnet. Die Gleichverteilung in Umfangsrichtung verbessert die Dämpfungseigenschaften, da das Dämpfungsfluid um den Umfang des hydraulischen Stoßdämpfers gleichverteilt zwischen den Arbeitsräumen hin und her strömen kann. Entsprechend einer erfindungsgemäßen Fortbildung des hydraulischen Stoßdämpfers sind die Kolbengliedströmungskanäle als Bohrung ausgebildet.

Darüber hinaus vorteilhaft sind die Druckplattenströmungskanälen in Umfangsrichtung um die Dämpfereinheitmittelachse gleichverteilt angeordnet. Die Gleichverteilung in Umfangsrichtung verbessert die Dämpfungseigenschaften, da das Dämpfungsfluid um den Umfang des hydraulischen Stoßdämpfers gleichverteilt zwischen den Arbeitsräumen hin und her strömen kann. Entsprechend einer erfindungsgemäßen Fortbildung des hydraulischen Stoßdämpfers sind die Druckplattenströmungskanäle als Bohrung ausgebildet. Die Arbeitsräume sind voneinander getrennt, sodass bei geschlossenem Bypasskanal das Dämpfungsfluid ausschließlich über die Kolbengliedströmungskanäle zwischen den Arbeitsräumen strömen kann.

Bevorzugt sind die Druckplatten mittels Federelementen federnd gegen das Kolbenglied vorgespannt. Die Federelemente sind besonders bevorzugt als Druckfeder, Flachfeder und/oder Wellenfeder ausgebildet. Ganz besonders bevorzugt ist das Federelement mittels Distanzhülse von dem Kolbenglied zur Begrenzung der Vorspannung der Druckplatte beabstandet. Hierdurch ist eine Änderung der Vorspannung auf die Druckplatten einfach und schnell, bspw. durch den Austausch der Federelemente möglich. Die Druckplatten können aber auch in sich federnd ausgebildet sein.

Vorzugsweise ist darüber hinaus der hydraulische Stoßdämpfer mit einer elektromagnetischen Dämpfungseinstellungseinheit ausgestattet, die es ermöglicht die Dämpfung des hydraulischen Stoßdämpfers, insbesondere durch die Einstellung der Federhärte der Federelemente, zu beeinflussen, sodass die Dämpfung einstellbar ist oder eingestellt werden kann. Eine derartige Einstellung ist vorzugsweise mittels einer Software möglich.

Nach einer zusätzlichen vorteilhaften Ausgestaltung des erfinderischen hydraulischen Stoßdämpfers weist der Kolbenring axiales Spiel zwischen den Druckplatten auf. Das axiale Spiel beträgt vorzugsweise zwischen den Druckplatten bis zu 1 mm, bevorzugt zwischen 1/100 mm und 5/10 mm, besonders bevorzugt zwischen 1/100 mm und 1/10 mm.

Zudem vorteilhaft ist es, wenn Kolbenglied und Kolbenring aus unterschiedlichen Materialien hergestellt sind. Vorteilhafterweise ist der Kolbenring bspw. aus Kunststoff und das Kolbenglied aus Aluminium hergestellt. Die unterschiedlichen Materialien von Kolbenglied und Kolbenring sollten dahingehend ausgewählt werden, dass das Material aus dem der Kolbenring hergestellt ist, einen höheren Wärmeausdehnungskoeffizient aufweist als das Material aus dem das Kolbenglied hergestellt ist.

Bevorzugt weist das Material aus dem der Kolbenring hergestellt ist, einen an die Viskosität des Dämpfungsfluids angepassten Wärmeausdehnungskoeffizienten auf. Besonders bevorzugt weist der Kolbenstützring des Kolbenrings an die Viskosität des Dämpfungsfluids angepassten Wärmeausdehnungskoeffizienten auf. Hierdurch hat der Kolbenring bzw. Kolbenstützring im Vergleich zum Kolbenglied eine größere Ausdehnung bei der Erwärmung des Dämpfungsfluids. Aufgrund der größeren Ausdehnung des Kolbenrings, bevorzugt des Kolbenstützrings, bei der Erwärmung des Dämpfungsfluids verringert sich das axiale Spiel des Kolbenrings gegenüber dem Kolbenglied. Bei Erwärmung des Dämpfungsfluids sinkt die Viskosität des Dämpfungsfluids und das Dämpfungsfluid wird fließfähiger. Die für den Zulauf des Dämpfungsfluids maßgeblichen Einlassflächen in der Kolbengliedaußenmantelfläche nehmen durch die Ausdehnung des Kolbenrings, bevorzugt des Kolbenstützrings, aufgrund des geringeren axialen Spiels ab, wodurch weniger nun fließfähigeres Dämpfungsfluid zwischen den beiden Arbeitsräumen strömen kann. Somit ergibt sich ein gleichbleibendes Temperatur/Kraft-Verhältnis und es treten trotz sich verändernder Viskosität des Dämpfungsfluids mit der Temperatur keine Dämpfungsverluste auf.

Bevorzugt weist das Kolbenglied für den Strömungsweg zum gedrosselten Überströmen des Dämpfungsfluids in einer Strömungsrichtung zwischen den beiden Arbeitsräumen baulich voneinander getrennte Kolbengliedströmungskanäle auf. Durch die bauliche Trennung der Kolbengliedströmungskanäle wird eine einfachere Konstruktion des Kolbens der Dämpfereinheit ermöglicht.

Zudem weisen die Kolbengliedströmungskanäle einen axialen Kolbengliedströmungskanalauslassabschnitt und einen axialen Kolbengliedströmungskanaleinlassabschnitt auf, wobei der Kolbengliedströmungskanaleinlassabschnitt zur Kolbengliedaußenmantelfläche hin geöffnet ist.

Entsprechend einer weiteren zusätzlichen Ausgestaltung ist ein Kolbengliedströmungskanal als Kolbengliedströmungsnut in der Kolbengliedaußenmantelfläche ausbildbar oder ausgebildet. Durch eine entsprechende Ausbildung des Kolbengliedströmungskanals als Kolbengliedströmungsnut ist die Herstellung der Kolbengliedströmungskanäle einfacher und zeitsparender. Zudem kann das Kolbenglied so jede beliebige Form annehmen und somit bspw. sternförmig, polygonförmig ausgebildet sein.

Nach einer zusätzlichen Fortbildung des erfinderischen hydraulischen Stoßdämpfers weisen die Druckplattenströmungskanäle eine einen axialen Druckplattenströmungskanalauslassabschnitt und einen axialen Druckplattenströmungskanaleinlassabschnitt auf, wobei der Druckplattenströmungskanalauslassabschnitt zu einer Druckplattenaußenmantelfläche hin geöffnet ist. Hierdurch wird das Ausströmen des Dämpfungsfluids in den entsprechenden Arbeitsraum optimiert, in dem die dem Dämpfungsfluid zur Verfügung stehenden Ausströmfläche vergrößert wird, sodass das Dämpfungsfluid schnell zwischen den beiden Arbeitsräumen überströmt.

Nachfolgend wird die Erfindung anhand der beiliegenden Zeichnung näher erläutert. Dabei können die Ihnen den Ansprüchen, der Beschreibung und der Zeichnung erwähnten Merkmale jeweils einzeln für sich oder in jedweder sinnvollen Kombination Erfindung wesentlich sein.

In der Zeichnung zeigen
- Figur 1: eine schematische Darstellung eines bevorzugten hydraulischen Stoßdämpfers,
- Figur 2: eine Explosionsdarstellung der Einzelteile eines Kolbens einer Dämpfereinheit des bevorzugten hydraulischen Stoßdämpfers in perspektivischer Ansicht mit einer durch die Dämpfereinheitmittelachse A-A verlaufenden Schnittebene B,
- Figur 3: eine Explosionsdarstellung der Einzelteile des Kolbens der Dämpfereinheit des bevorzugten hydraulischen Stoßdämpfers in perspektivischer Ansicht in zu Figur 2 von links nach rechts umgekehrter Reihenfolge der Einzelteile,
- Figur 4: eine Explosionsdarstellung der Einzelteile des auf der Kolbenstange angeordneten Kolbens der Dämpfereinheit des bevorzugten hydraulischen Stoßdämpfers in Seitenansicht,
- Figur 5: eine Explosionsdarstellung der Einzelteile des auf der Kolbenstange angeordneten Kolbens der Dämpfereinheit im einem Ausschnitt des Gehäuses des bevorzugten hydraulischen Stoßdämpfers im Längsschnitt durch eine durch die Dämpfereinheitmittelachse A-A verlaufende Schnittebene B,
- Figur 6: eine Seitenansicht des Kolbens der Dämpfereinheit des bevorzugten hydraulischen Stoßdämpfers,
- Figur 7: eine Darstellung des auf der Kolbenstange angeordneten Kolbens der Dämpfereinheit des bevorzugten hydraulischen Stoßdämpfers gemäß Fig. 6 im Längsschnitt durch eine durch die Dämpfereinheitmittelachse A-A verlaufende Schnittebene B,
- Figur 8: eine Darstellung des bevorzugten hydraulischen Stoßdämpfers im Längsschnitt durch eine durch die Dämpfereinheitmittelachse A-A verlaufende Schnittebene B mit in Strömungsrichtung eines Dämpfungsfluids markiertem Strömungsweg zwischen dem zweiten und dem ersten Arbeitsraum im Betriebszustand und
- Figur 9: eine Darstellung des bevorzugten hydraulischen Stoßdämpfers im Längsschnitt durch eine durch die Dämpfereinheitmittelachse A-A verlaufende Schnittebene B mit in Strömungsrichtung eines Dämpfungsfluids markiertem Strömungsweg zwischen dem ersten und dem zweiten Arbeitsraum im Betriebszustand.

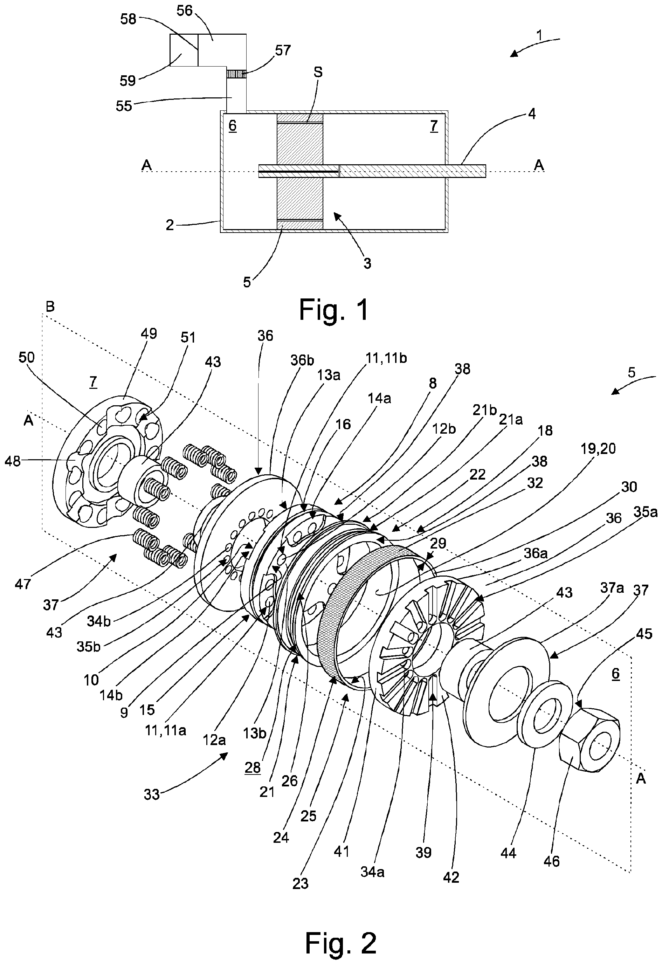

Fig. 1 zeigt eine schematische Darstellung eines bevorzugten hydraulischen Stoßdämpfers 1.

Der hydraulische Stoßdämpfer 1 umfasst ein Gehäuse 2 und eine Dämpfereinheit 3 (Zugstufe). Die Dämpfereinheit 3 ist in Achsrichtung einer Dämpfereinheitmittelachse A-A relativ zum Gehäuse 2 beweglich und weist einen an einer Kolbenstange 4 angeordneten Kolben 5 auf. Hierbei unterteilt der Kolben 5 das Gehäuse 2 in einen mit einem Dämpfungsfluid gefüllten ersten Arbeitsraum 6 und einen mit einem Dämpfungsfluid gefüllten zweiten Arbeitsraum 7. Die beiden Arbeitsräume 6, 7 sind mittels einer Vielzahl an den Kolben 5 durchdringenden Strömungskanälen S miteinander verbundenen. Die Strömungskanäle S bilden einen Strömungsweg zum gedrosselten Überströmen des Dämpfungsfluids in einer Strömungsrichtung zwischen den beiden Arbeitsräumen 6, 7 aus.

Bei einer durch einen Stoß eingeleiteten Dämpfung wird die Dämpfereinheit 3 in Achsrichtung der Dämpfereinheitmittelachse A-A relativ zum Gehäuse 2 verschoben und das Dämpfungsfluid des hydraulischen Stoßdämpfers 1 strömt durch die Strömungskanäle S des Kolbens 5 gedrosselt in einer Strömungsrichtung zwischen den beiden Arbeitsräumen 6, 7.

Anzahl und Querschnittsfläche der Strömungskanäle S bestimmen maßgeblich das Dämpfungsverhalten des hydraulischen Stoßdämpfers 1, da dadurch Einfluss auf das gedrosselte Überströmen des Dämpfungsfluids zwischen den beiden Arbeitsräumen 6, 7 ausgeübt wird. Eine größere Anzahl an Strömungskanälen S bei gleichbleibender Querschnittsfläche der Strömungskanäle S erhöht die Gesamtquerschnittsfläche für das Dämpfungsfluid beim Strömen zwischen den beiden Arbeitsräumen 6, 7. Wird hingegen bei gleichbleibender Anzahl an Strömungskanälen S die Querschnittsfläche der Strömungskanäle S verringert, sinkt die Gesamtquerschnittsfläche für das Dämpfungsfluid beim Strömen zwischen den beiden Arbeitsräumen 6, 7. Durch solche Anpassung kann u.a. gezielt Einfluss auf das Dämpfungsverhalten des hydraulischen Stoßdämpfers genommen werden.

Zudem weist der hydraulische Stoßdämpfer 1 vorzugsweise einen über eine Verbindungsleitung 55 mit dem Arbeitsraum 6 verbundenen Ausgleichsbehälter 56 auf. In der Verbindungsleitung 55 ist eine Ventilanordnung 57 angeordnet, die in ihrer Ausgestaltung der des Kolbens 5 der Dämpfereinheit 3 entspricht. Federt der Kolben 5 des hydraulischen Stoßdämpfers 1 ein, wird durch das Eintauchen der Kolbenstange 4 das unter Druck stehende Dämpfungsfluid aus dem Arbeitsraum 6 verdrängt und strömt über Strömungskanäle S in den Arbeitsraum 7 und über die in der Verbindungsleitung 55 angeordnete Ventilanordnung 57 in den Ausgleichsbehälter 56. Vorzugsweise sind der Kolben 5 der Dämpfereinheit 3 und Ventilanordnung 57 identisch ausgebildet. Dementsprechend entspricht im Ausführungsbeispiel vorzugsweise die Ventilanordnung 57 dem Kolben 5 der Dämpfereinheit 3. Der Ausgleichsbehälter 56 umfasst ein unter Vorspannung stehendes Ausgleichsmittel 58, bspw. eine Membran, die beim Ausfedern das Dämpfungsfluid aus dem Ausgleichsbehälter 56 in den Arbeitsraum 6 verdrängt. Bevorzugt wird das Ausgleichsmittel 58 durch ein in einem Gasraum 59 befindlichen Gas, besonders bevorzugt Stickstoff (N₂) oder ein anderes inertes Gas, vorgespannt.

In Fig. 2 wird eine Explosionsdarstellung der Einzelteile des Kolbens 5 der Dämpfereinheit 3 des bevorzugten hydraulischen Stoßdämpfers 1 in perspektivischer Ansicht mit einer durch die Dämpfereinheitmittelachse A-A verlaufenden Schnittebene B dargestellt.

Der im Ausführungsbeispiel dargestellt hydraulische Stoßdämpfer 1 weist ein zylinderförmiges Gehäuse 2 auf.

Der Kolben 5 weist ein bezüglich der nicht dargestellten Kolbenstange 4 feststehendes Kolbenglied 8 auf. Das Kolbenglied 8 hat eine erste dem ersten Arbeitsraum 6 zugewandte Kolbengliedstirnfläche 9 und eine dem zweiten Arbeitsraum 7 zugewandte Kolbengliedstirnfläche 10.

Im Ausführungsbeispiel verfügt das Kolbenglied 8 über eine Vielzahl an zur Verbindung des ersten und des zweiten Arbeitsraums 6, 7 geeigneten Kolbengliedströmungskanälen 11. Die Kolbengliedströmungskanäle 11 sind in Umfangsrichtung um die Dämpfereinheitmittelachse A-A gleichverteilt angeordnet.

Das Kolbenglied 8 verfügt für den Strömungsweg zum gedrosselten Überströmen des Dämpfungsfluids in einer Strömungsrichtung zwischen den beiden Arbeitsräumen 6, 7 über baulich voneinander getrennte Kolbengliedströmungskanäle 11a und 11b. Die Kolbengliedströmungskanäle 11 sind im Ausführungsbeispiel als Bohrung 12 ausgebildet und weisen einen axialen Kolbengliedströmungskanalauslassabschnitt 13 und einen axialen Kolbengliedströmungskanaleinlassabschnitt 14 auf, wobei der Kolbengliedströmungskanaleinlassabschnitt 14 zur Kolbengliedaußenmantelfläche 15 hin geöffnet ist.

Im Ausführungsbeispiel sind als Kolbengliedströmungskanal 11a zwei Bohrungen 12a ausgebildet, die ein gedrosseltes Überströmen des Dämpfungsfluids mit einer Strömungsrichtung von der dem ersten Arbeitsraum 6 zugewandten ersten Kolbengliedstirnfläche 9 in Achsrichtung der Dämpfereinheitmittelachse A-A zu der dem zweiten Arbeitsraum 7 zugewandten zweiten Kolbengliedstirnfläche 10 ermöglichen. Das Kolbenglied 8 weist im Ausführungsbeispiel vier Kolbengliedströmungskanäle 11a auf. Die Anzahl der den Kolben 5 durchdringenden Kolbengliedströmungskanäle 11a ist frei wählbar, bspw. sind ein, zwei, drei, vier, fünf, sechs, sieben, acht, oder mehr Strömungskanäle 11a mit einer beliebigen Anzahl an Bohrungen 12a möglich.

Des Weiteren ist der Kolbengliedströmungskanal 11b als eine Bohrung 12b ausgebildet. Der Kolbengliedströmungskanal 11b ermöglicht ein gedrosseltes Überströmen des Dämpfungsfluids mit einer Strömungsrichtung von der zweiten dem zweiten Arbeitsraum 7 zugewandten Kolbengliedstirnfläche 10 in Achsrichtung der Dämpfereinheitmittelachse A-A zu der ersten dem ersten Arbeitsraum 6 zugewandten Kolbengliedstirnfläche 9. Das Kolbenglied 8 weist im Ausführungsbeispiel ebenfalls vier Kolbengliedströmungskanäle 11b auf. Die Anzahl der den Kolben 5 durchdringenden Kolbengliedströmungskanäle 11b ist auch frei wählbar, bspw. sind ein, zwei, drei, vier, fünf, sechs, sieben, acht, oder mehr Strömungskanäle 11b mit einer beliebigen Anzahl an Bohrungen 12b möglich.

Bevorzugt sind die Kolbengliedströmungskanäle 11a und 11b, wie im Ausführungsbeispiel gezeigt, in Umfangsrichtung um die Dämpfereinheitmittelachse A-A gleichverteilt, alternierend angeordnet.

Durch eine unterschiedliche Querschnittsfläche der Kolbengliedströmungskanäle 11 kann ein unterschiedliches Strömungsverhalten abgebildet werden, wodurch das Dämpfungsverhalten des bevorzugten hydraulischen Stoßdämpfers 1 an verschiedenste Anforderungen, wie bspw. das zu befahrende Gelände, anpassbar ist. Hierbei führt eine kleine Querschnittsfläche des Kolbengliedströmungskanals 11 zu einem dem Dämpfungsfluid entgegengesetzten großen Strömungswiderstand und somit zu einem härteren Dämpfungsverhalten des bevorzugten hydraulischen Stoßdämpfers 1.

Der Kolbengliedströmungskanal 11 kann in den unterschiedlichsten Formen ausgebildet sein und bspw. auch als eine Kolbengliedströmungsnut in der Kolbengliedaußenmantelfläche 15 ausbildbar oder ausgebildet sein.

In der Kolbengliedaußenmantelfläche 15 ist im Ausführungsbeispiel eine Kolbengliednut 16 ausgebildet, in der ein in Fig. 2 nicht gezeigtes Kolbenglieddichtungselement 17 zur Abdichtung zwischen Kolbenglied 8 und einem im Ausführungsbeispiel mehrteilig ausgebildeten Kolbenring 18 angeordnet ist.

Der eine Kolbenringinnenmantelfläche 19 aufweisende Kolbenring 18 ist in Achsrichtung der Dämpfereinheitmittelachse A-A verschiebbar, koaxial auf dem Kolbenglied 8 angeordnet. Im Ausführungsbeispiel weist der Kolbenring 18 einen eine Kolbenstützringinnenmantelfläche 20 und eine Kolbenstützringaußenmantelfläche 21 aufweisenden Kolbenstützring 22 und einen eine Kolbendichtringinnenmantelfläche 23 und eine Kolbendichtringaußenmantelfläche 24 aufweisenden Kolbendichtring 25 auf.

In einer in der Kolbenstützringaußenmantelfläche 21 ausgebildeten Kolbenringnut 26 ist ein nicht dargestelltes Kolbenringdichtungselement 27 zur Abdichtung zwischen Kolbenstützring 22 und Kolbendichtring 25 angeordnet.

Die Kolbenstützringaußenmantelfläche 21 umfasst eine innere Kolbenstützringaußenmantelfläche 21a und eine äußere Kolbenstützringaußenmantelfläche 21b. Die innere Kolbenstützringaußenmantelfläche 21a ist gegenüber einer äußeren Kolbenstützringaußenmantelfläche 21b zurückversetzt ausgebildet, sodass sich ein Kolbendichtringaufnahmeraum 28 aufspannt, in dem der Kolbendichtring 25 anordenbar ist. Hierbei hat der Kolbendichtring 25 eine eine Wandstärke 29 aufweisende Wand 30, sodass der Kolbenring 18 durch die zueinander angeordnete Kolbendichtringaußenmantelfläche 24 und eine äußere Kolbenstützringaußenmantelfläche 21b eine ebene hier nicht gezeigte Kolbenringaußenmantelfläche 31 ausbildet.

Im Ausführungsbeispiel ist die Kolbendichtringaußenmantelfläche 24 zur Abdichtung gegenüber dem nicht gezeigten Gehäuse 2 mit einem Dichtungsmaterial 32 beschichtet. Alternativ möglich ist, dass die Kolbenringaußenmantelfläche 31, umfassend die Kolbendichtringaußenmantelfläche 24 und die äußere Kolbenstützringaußenmantelfläche 21b - zur Abdichtung gegenüber dem Gehäuse 2 mit einem Dichtungsmaterial 32 beschichtet ist.

Als Dichtungsmaterial 32 wird bevorzugt bspw. Polytetraflourethylen (PTFE), polyflourierte Alkylverbindungen (PFA), Fluorethylen-Propylen (FEP), Ethylen-Tetrafluorethylen-Copolymer (ETFE) und/oder Polyvinylidenfluorid (PVDF) zur Beschichtung der Kolbendichtringaußenmantelfläche 24 oder der Kolbenringaußenmantelfläche 31 verwendet.

Kolbenglied 8 und Kolbenring 18 bilden zusammen die Kolbeneinheit 33 aus.

Axial beidseits des die Kolbengliedaußenmantelfläche 15 aufweisenden Kolbenglieds 8 ist je eine über im Ausführungsbeispiel als Bohrung 34 ausgebildete Druckplattenströmungskanäle verfügende Druckplatte 36 angeordnet. Der am Kolbenglied 8 verschiebbar angeordnete Kolbenring 18 weist bevorzugt axiales Spiel zwischen den Druckplatten 36 auf, wobei das axiale Spiel zwischen dem Kolbenring 18 und den Druckplatten 36 bis zu 1 mm, bevorzugt zwischen 1/100 mm und 5/10 mm, besonders bevorzugt zwischen 1/100 mm und 1/10 mm, beträgt.

Die Druckplatten 36 sind mittels einer Federkraft aufweisenden Federelementen 37 federnd gegen das Kolbenglied 8 vorgespannt, wobei die Federelemente 37 vorzugsweise als Druckfeder, wie bspw. eine Schraubenfeder, Kegelfeder (konische Druckfeder), Tonnenfeder (doppelkonische Druckfeder), als Flachfeder, wie bspw. eine Tellerfeder oder Federscheibe, und/oder als Wellenfeder ausbildbar sind. Die Druckplatten 36 können auch als in sich federnde Federmittel ausgebildet sein, wobei die Druckplatten 36 bevorzugt durch Federelemente 37 gegenüber der Kolbeneinheit 33, insbesondere gegenüber dem Kolbenglied 8, vorgespannt werden.

Der eine Kolbenringaußenmantelfläche 31 aufweisende Kolbenring 18 ist zwischen den Druckplatten 36 angeordnet.

Die Druckplatten 36 sind radial so bemessen, dass eine den Druckplatten 36 jeweils zugewandte Kolbenringstirnfläche 38 radial über die zugeordnete Druckplatte 36 übersteht, derart, dass im Betriebszustand der Kolbenring 18 durch das auf die eine Kolbenringstirnfläche 38 drückende Dämpfungsfluid verschiebbar ist und die jenseitige Druckplatte 36 durch die Verschiebung des Kolbenrings 18 gegen die Federkraft ausgelenkt wird, wodurch durch die Kolbengliedströmungskanäle 11 und die Druckplattenströmungskanäle der jenseitigen Druckplatte 36 hindurch ein Strömungsweg zum gedrosselten Überströmen des Dämpfungsfluids zwischen den beiden Arbeitsräumen 6, 7 freigebbar ist.

Im Ausführungsbeispiel eines zylinderförmigen hydraulischen Stoßdämpfers bildet sich somit zwischen Gehäuse 2 und Druckplatte 36 ein Ringspalt aus, dessen Bodenfläche als ein Teil der Kolbenringstirnfläche 38 ausgebildet ist.

Im Ausführungsbeispiel sind die das Kolbenglied 8 und den Kolbenring 18 umgebenden Druckplatten 36 unterschiedlich ausgebildet.

Die Druckplatte 36a verfügt über als Bohrung 34a ausgebildete Druckplattenströmungskanäle 35a die eine einen axialen Druckplattenströmungskanalauslassabschnitt 39 und einen hier nicht gezeigten axialen Druckplattenströmungskanaleinlassabschnitt 40 aufweisen. Der Druckplattenströmungskanalauslassabschnitt 39 ist hierbei zu einer Druckplattenaußenmantelfläche 41 der Druckplatte 36a und einer dem Kolbenglied 8 abgewandten Druckplattenstirnfläche 42 hin geöffnet. Die Druckplattenströmungskanäle 35a der Druckplatte 36a sind in Umfangsrichtung nach Art eines Lochkranzes um die Dämpfereinheitmittelachse A-A gleichverteilt angeordnet. Die Druckplattenströmungskanalauslassabschnitte 39 sind zudem fächerartig um die Dämpfereinheitmittelachse A-A ausgebildet.

Die Druckplatte 36b verfügt über als Bohrung 34b ausgebildete Druckplattenströmungskanäle 35b, die in Umfangsrichtung ebenfalls nach Art eines Lochkranzes um die Dämpfereinheitmittelachse A-A gleichverteilt angeordnet sind.

Die Druckplattenströmungskanäle sind in den Druckplatten 36a und 36b derart angeordnet, dass die Kolbengliedströmungskanäle 11 hinsichtlich der den Druckplatten 36a und 36b zugewandten Kolbengliedstirnflächen 9, 10 abgedichtet sind.

Der Druckplattenströmungskanal kann in den unterschiedlichsten Formen ausgebildet sein und bspw. auch als eine Druckplattenströmungsnut in der Druckplattenaußenmantelfläche 41 ausbildbar oder ausgebildet sein.

Das Federelement 37 ist mittels Distanzhülse 43 von dem Kolbenglied 8 zur Begrenzung der Vorspannung der Druckplatte 36 beabstandet. Im Ausführungsbeispiel werden zwei unterschiedliche Federelemente 37a und 37b zur Vorspannung der Druckplatten 36a und 36b verwendet.

Das Federelement 37a ist als Tellerfeder ausgebildet. Das Federelement 37a wird mittels einer Unterlegscheibe 44 und einer als Anschlag 45 dienender Mutter 46 gegenüber der nicht dargestellten Kolbenstange 4 fixiert.

Das Federelement 37b ist mehrteilig ausgebildet und umfasst im Ausführungsbeispiel zwölf Schraubenfedern 47, eine Distanzhülse 43 und eine quer zur Dämpfereinheitmittelachse A-A ausgebildete Stützplattenströmungskanäle 48 umfassende Stützplatte 49. Die Stützplattenströmungskanäle 48 verbessern das Ausströmen des Dämpfungsfluids in den entsprechenden Arbeitsraum 6, 7.

Vorzugsweise ist darüber hinaus der hydraulische Stoßdämpfer mit einer elektromagnetischen Dämpfungseinstellungseinheit ausgestattet, die es ermöglicht die Dämpfung des hydraulischen Stoßdämpfers, insbesondere durch die Einstellung der Federhärte der Federelemente, zu beeinflussen, sodass die Dämpfung einstellbar ist oder eingestellt werden kann. Eine derartige Einstellung von außen wird bevorzugt mittels einer Software ermöglicht und ist manuell, bspw. durch Knopfdruck oder dergleichen, durchführbar.

In der Stützplatte 49 sind als Sacklöcher 50 ausgebildete Aufnahmen 51 ausgebildet, die die Schraubenfedern 47 zumindest teilweise aufnehmen und relativ zu der Druckplatte 36b positionieren. Die Aufnahmen 51 sind nach Art eines Lochkranzes in Umfangsrichtung um die Dämpfereinheitmittelachse A-A gleichverteilt angeordnet.

In der Druckplatte 36b können ebenfalls Aufnahmen zur Aufnahme der Schraubenfedern 47 ausgebildet sein. Im Ausführungsbeispiel sind in der Druckplatte 36b keine Aufnahmen vorgesehen. Die Stützplatte 49 wird von einem in Fig. 2 nicht gezeigten Anschlag 52 der Kolbenstange 4 fixiert.

Die auf die Druckplatten 36a und 36b wirkende Vorspannung ist somit in Abhängigkeit von der jeweils eingesetzten Distanzhülse 43 stufenlos durch Betätigung der Mutter 46 einstellbar. Die Distanzhülse 43 begrenzt die maximal auf die Druckplatten 36 ausübbare Vorspannung.

Des Weiteren weist die die Dämpfereinheit 3 des hydraulischen Stoßdämpfers 1 einen hier nicht dargestellten in der Kolbenstange 4 ausgebildeten Bypasskanal 60 auf. Der Durchfluss des Bypasskanals 60 ist mittels eines ebenfalls nicht gezeigten Ventils 61, vorzugsweise eines Nadelventils, einstellbar. Ist der in der Kolbenstange 4 angeordnete Bypasskanal 60 geschlossen werden eine degressive Kennlinie und die maximal mögliche Zugdämpfung erreicht. Die Dämpfung erfolgt über die voreingestellten Federelemente 37 und den Durchfluss des Dämpfungsfluids am Kolben 5. Daraus resultiert eine sportlich straffe Abstimmung der Zugstufe, die hilft Wank- und Nickbewegungen des Fahrzeugs zu kontrollieren. Ist der in der Kolbenstange 4 angeordnete Bypasskanal 60 geöffnet, werden eine progressive Kennlinie und die mindestens mögliche Zugdämpfung erreicht. Die durch den Bypasskanal 60 strömende Menge an Dämpfungsfluid steht dem Kolben 5 nicht mehr zur Verfügung und die Dämpferkräfte werden dadurch reduziert. Eine geringe Zugdämpfung erhöht den Fahrkomfort.

Federt der Kolben 5 des hydraulischen Stoßdämpfers 1 ein, wird durch das Eintauchen der Kolbenstange 4 das unter Druck stehende Dämpfungsfluid aus dem Arbeitsraum 6 verdrängt und strömt über die Kolbengliedströmungskanäle 11 in den Arbeitsraum 7 und die vorzugsweise als Rückschlagventil ausgebildete Ventilanordnung 57 in einen Ausgleichsbehälter 56. Im Ausführungsbeispiel ist die Ventilanordnung 57 und der Kolben 5 der Dämpfereinheit 3 baugleich ausgebildet, wobei die Zugstufe keine Federkraft aufweist. Beim Einfedern fließt das Dämpfungsfluid durch die Druckstufe des Kolbens 5 der Dämpfereinheit vom Arbeitsraum 6 in den Arbeitsraum 7 und gleichzeitig durch die Druckstufe der Ventilanordnung 57 in den Ausgleichsbehälter 56. Beim Ausfedern fließt das Dämpfungsfluid durch die Zugstufe der Ventilanordnung 57, die keine oder nur eine minimale Federkraft aufweist, vom Ausgleichsbehälter 56 zurück in den Arbeitsraum 6 und vom Arbeitsraum 6 durch die Zugstufe des Kolbens 5 der Dämpfereinheit 3 zurück in den Arbeitsraum 7.

Durch die Einstellung des jeweiligen Bypasskanals in der Kolbenstange 4 oder in der Ventilanordnung kann das Dämpfungsverhalten weiter vorteilhaft angepasst werden. Durch geschlossene Bypasskanäle wird eine sportlich straffe Abstimmung erreicht und durch geöffnete Bypasskanäle wird der Fahrkomfort erhöht.

Die Arbeitsräume 6, 7 sind voneinander getrennt, sodass bei einem in der Kolbenstange 4 angeordneten geschlossenen Bypasskanal 60 das Dämpfungsfluid ausschließlich über die Kolbengliedströmungskanäle 11 von dem einen in den anderen Arbeitsraum 6, 7 strömen kann.

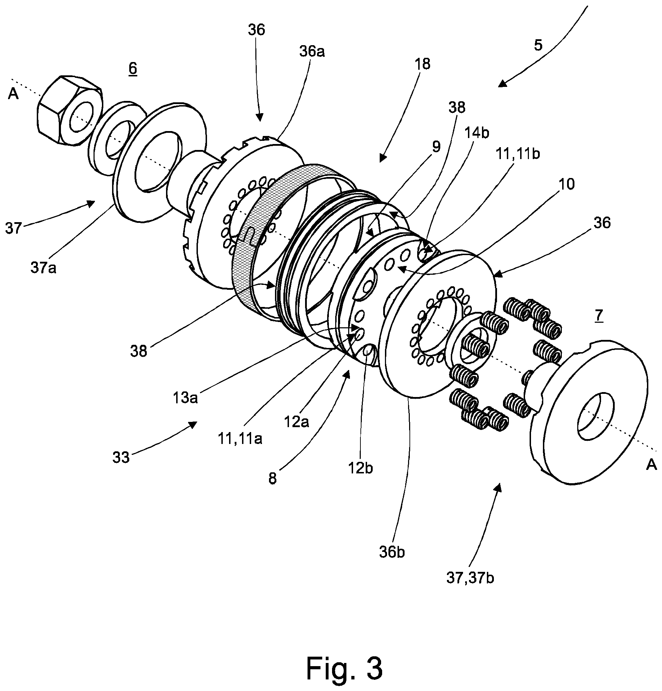

Fig. 3 stellt eine Explosionsdarstellung der Einzelteile des Kolbens 5 der Dämpfereinheit 3 des bevorzugten hydraulischen Stoßdämpfers 1 in perspektivischer Ansicht in zu Fig. 2 von links nach rechts umgekehrter Reihenfolge der Einzelteile dar.

Das Kolbenglied 8 ist somit von der Kolbengliedstirnfläche 10 her dargestellt.

Wie bereits zu Fig. 2 erläutert verfügt das Kolbenglied 8 über eine Vielzahl an zur Verbindung des ersten und des zweiten Arbeitsraums 6, 7 geeigneten Kolbengliedströmungskanälen 11. Diese sind in Umfangsrichtung um die Dämpfereinheitmittelachse A-A gleichverteilt angeordnet und in einer Strömungsrichtung des Dämpfungsfluids zwischen den beiden Arbeitsräumen 6, 7 baulich voneinander getrennt.

In Fig.3 sind die ein gedrosseltes Überströmen des Dämpfungsfluids mit einer Strömungsrichtung von der dem zweiten Arbeitsraum 7 zugewandten zweiten Kolbengliedstirnfläche 10 in Achsrichtung der Dämpfereinheitmittelachse A-A zu der dem ersten Arbeitsraum 6 zugewandten ersten Kolbengliedstirnfläche 9 ermöglichenden Kolbengliedströmungskanäle 11b mit ihrem Kolbengliedströmungskanaleinlassabschnitt 14b und die Kolbengliedströmungskanäle 11a mit ihrem Kolbengliedströmungskanalauslassabschnitt 13a dargestellt. Das Kolbenglied 8 weist im Ausführungsbeispiel vier Kolbengliedströmungskanäle 11a und vier Kolbengliedströmungskanäle 11b auf mit beliebig vielen Bohrungen 12a.

Die Anzahl der den Kolben 5 durchdringenden Kolbengliedströmungskanäle 11a und 11b ist frei wählbar, wobei ein, zwei, drei, vier, fünf, sechs, sieben, acht, oder mehr Strömungskanäle 11 und mit beliebig vielen Bohrungen 12b möglich sind.

Die Kolbengliedströmungskanäle 11a und 11b sind in Umfangsrichtung um die Dämpfereinheitmittelachse A-A gleichverteilt, alternierend angeordnet.

Der Kolbenring 18 ist in Achsrichtung der Dämpfereinheitmittelachse A-A verschiebbar, koaxial auf dem Kolbenglied 8 angeordnet.

Das Kolbenglied 8 und der Kolbenring 18 bilden die Kolbeneinheit 33 aus und sind zwischen den Druckplatten 36 angeordnet, wobei durch eine Verschiebung des Kolbenrings 18 aufgrund des auf dem Kolbenringstirnfläche 38 anstehenden Dämpfungsfluids auch die jenseitige Druckplatte 36 verschoben wird, sodass das Dämpfungsfluid zwischen den Arbeitsräumen 6, 7 strömen kann.

Die Druckplatten 36 sind durch eine Federkraft ausübende Federelemente 37 federnd gegen die Kolbeneinheit 33, bevorzugt gegen das Kolbenglied 8, vorgespannt.

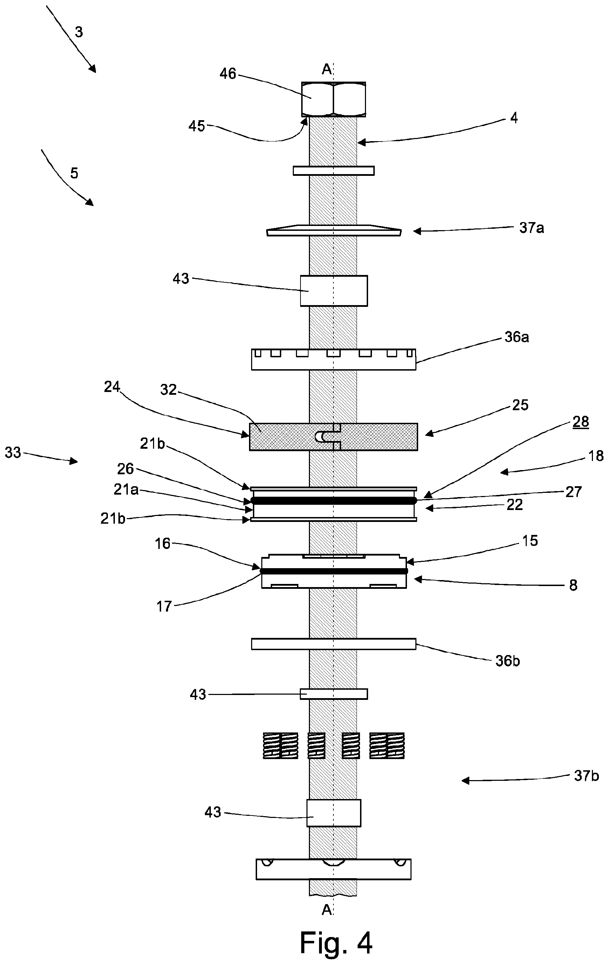

Eine Explosionsdarstellung der Einzelteile des auf der Kolbenstange 4 angeordneten Kolbens 5 der Dämpfereinheit 3 des bevorzugten hydraulischen Stoßdämpfers 1 in Seitenansicht wird in Fig. 4 gezeigt.

Das Kolbenglied 8 weist in der Kolbengliedaußenmantelfläche 15 eine Kolbengliednut 16 auf, in der das Kolbenglieddichtungselement 17 sein angeordnet ist. Das Kolbenglieddichtungselement 17 dichtet zwischen dem Kolbenglied 8 und dem Kolbenring 18 ab.

Der Kolbenring 18 ist im Ausführungsbeispiel mehrteilig ausgebildet und umfasst den Kolbenstützring 22 und den Kolbendichtring 25.

Der Kolbenstützring 22 hat eine innere Kolbenstützringaußenmantelfläche 21a und eine äußere Kolbenstützringaußenmantelfläche 21b. Die innere Kolbenstützringaußenmantelfläche 21a ist gegenüber einer äußeren Kolbenstützringaußenmantelfläche 21b zurückversetzt ausgebildet, sodass sich ein Kolbendichtringaufnahmeraum 28 aufspannt. Im Kolbendichtringaufnahmeraum 28 ist der Kolbendichtring 25 anordenbar. Zwischen dem Kolbenstützring 22 und dem Kolbendichtring 25 ist in einer in der inneren Kolbenstützringaußenmantelfläche 21a angeordneten Kolbenringnut 26 das Kolbenringdichtungselement 27 positioniert, das zwischen dem Kolbenstützring 22 und dem Kolbendichtring 25 abgedichtet.

Im Ausführungsbeispiel ist die Kolbendichtringaußenmantelfläche 24 zur Abdichtung gegenüber dem nicht gezeigten Gehäuse 2 mit einem Dichtungsmaterial 32 beschichtet. Als Dichtungsmaterial 32 wird bevorzugt bspw. PTFE, PFA, FEP, ETFE und/oder PVDF zur Beschichtung der Kolbendichtringaußenmantelfläche 24 eingesetzt.

Kolbenglied 8 und der koaxial auf dem Kolbenglied 8 in Achsrichtung der Dämpfereinheitmittelachse A-A verschiebbar angeordnete Kolbenring 18 bilden die Kolbeneinheit 33 aus, die zwischen den Druckplatten 36a und 36b angeordnet ist. Die Druckplatten 36 sind durch ein eine Federkraft ausübendes Federelement 37a und 37b federnd gegen die Kolbeneinheit 33, insbesondere das Kolbenglied 8, vorgespannt.

Die im Ausführungsbeispiel mittels der einen Anschlag 45 aufweisenden Mutter 46 stufenlos einstellbare und auf die Druckplatte 36 wirkende Vorspannung wird durch die zwischen dem Federelement 37 und der Kolbeneinheit 33, bevorzugt dem Kolbenglied 8, angeordnete Distanzhülse 43 begrenzt.

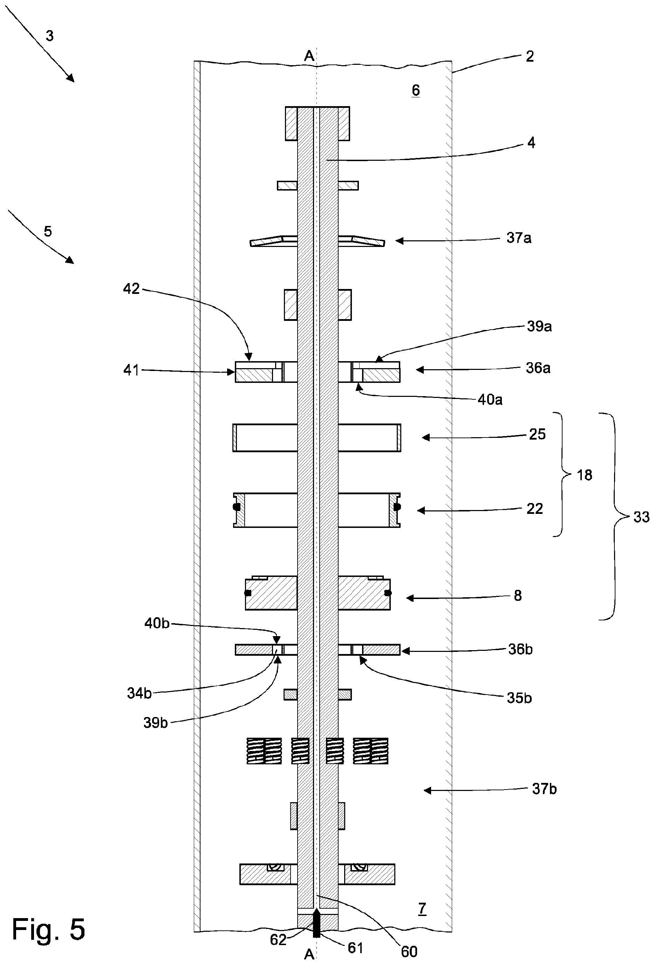

In Fig. 5 wird eine Explosionsdarstellung der Einzelteile des auf der Kolbenstange 4 angeordneten Kolbens 5 der Dämpfereinheit 3 in einem Ausschnitt des Gehäuses 2 des bevorzugten hydraulischen Stoßdämpfers 1 im Längsschnitt durch eine durch die Dämpfereinheitmittelachse A-A verlaufende Schnittebene B abgebildet.

Die Kolbeneinheit 33, als Kolbenglied 8 und mehrteilig den Kolbenstützring 22 und den Kolbendichtring 25 umfassender Kolbenring 18 ausgebildet, ist zwischen den Druckplatten 36 angeordnet, die durch eine Federkraft ausübende Federelemente 37 gegen die Kolbeneinheit 33, insbesondere gegen das Kolbenglied 8, vorgespannt sind.

Die Druckplatte 36a verfügt über als Bohrung 34a ausgebildete Druckplattenströmungskanäle 35a. Die Druckplattenströmungskanäle 35a der Druckplatte 36a weisen einen Druckplattenströmungskanalauslassabschnitt 39a und einem Druckplattenströmungskanaleinlassabschnitt 40a auf. Der Druckplattenströmungskanalauslassabschnitt 39a ist hierbei zu einer Druckplattenaußenmantelfläche 41 der Druckplatte 36a und einer dem Kolbenglied 8 abgewandten Druckplattenstirnfläche 42 hin geöffnet. Hierdurch wird ein verbessertes Ausströmen in den entsprechenden Arbeitsraum 6, 7 erreicht.

Die Druckplatte 36b verfügt über als Bohrung 34b ausgebildete Druckplattenströmungskanäle 35b mit einem Druckplattenströmungskanalauslassabschnitt 39b und einem Druckplattenströmungskanaleinlassabschnitt 40b.

Des Weiteren weist die die Dämpfereinheit 3 des hydraulischen Stoßdämpfers 1 einen in der Kolbenstange 4 ausgebildeten Bypasskanal 60 auf. Der Durchfluss des Bypasskanals 60 ist mittels eines Ventils 61, vorzugsweise eines Nadelventils, einstellbar. Ist der in der Kolbenstange 4 angeordnete Bypasskanal 60 geschlossen werden eine degressive Kennlinie und die maximal mögliche Zugdämpfung erreicht. Die Dämpfung erfolgt über die voreingestellten Federelemente 37 und den Durchfluss des Dämpfungsfluids am Kolben 5. Daraus resultiert eine sportlich straffe Abstimmung der Zugstufe, die hilft Wank- und Nickbewegungen des Fahrzeugs zu kontrollieren. Ist der in der Kolbenstange 4 angeordnete Bypasskanal 60 geöffnet, werden eine progressive Kennlinie und die mindestens mögliche Zugdämpfung erreicht. Die durch den Bypasskanal 60 strömende Menge an Dämpfungsfluid steht dem Kolben 5 nicht mehr zur Verfügung und die Dämpferkräfte werden dadurch reduziert. Eine geringe Zugdämpfung erhöht den Fahrkomfort.

Federt der Kolben 5 des hydraulischen Stoßdämpfers 1 ein, wird durch das Eintauchen der Kolbenstange 4 das unter Druck stehende Dämpfungsfluid aus dem Arbeitsraum 6 verdrängt und strömt über die Kolbengliedströmungskanäle 11 in den Arbeitsraum 7 und die vorzugsweise als Rückschlagventil ausgebildete Ventilanordnung 57 in einen Ausgleichsbehälter 56. Im Ausführungsbeispiel ist die Ventilanordnung 57 und der Kolben 5 der Dämpfereinheit 3 baugleich ausgebildet, wobei die Zugstufe keine Federkraft aufweist. Dementsprechend entspricht im Ausführungsbeispiel vorzugsweise die Ventilanordnung 57 dem Kolben 5 der Dämpfereinheit 3, wobei die Ventilanordnung 57 kleiner dimensioniert ist als der Kolben 5. Beim Einfedern fließt das Dämpfungsfluid durch die Druckstufe des Kolbens 5 der Dämpfereinheit vom Arbeitsraum 6 in den Arbeitsraum 7 und gleichzeitig durch die Druckstufe der Ventilanordnung 57 in den Ausgleichsbehälter 56. Beim Ausfedern fließt das Dämpfungsfluid durch die Zugstufe der Ventilanordnung 57, die keine oder nur eine minimale Federkraft aufweist, vom Ausgleichsbehälter 56 zurück in den Arbeitsraum 6 und vom Arbeitsraum 6 durch die Zugstufe des Kolbens 5 der Dämpfereinheit 3 zurück in den Arbeitsraum 7.

Durch die Einstellung des jeweiligen Bypasskanals in der Kolbenstange 4 oder in der Ventilanordnung kann das Dämpfungsverhalten weiter vorteilhaft angepasst werden. Durch geschlossene Bypasskanäle wird eine sportlich straffe Abstimmung erreicht und durch geöffnete Bypasskanäle wird der Fahrkomfort erhöht.

Die Arbeitsräume 6, 7 sind voneinander getrennt, sodass bei einem in der Kolbenstange 4 angeordneten geschlossenen Bypasskanal 60 das Dämpfungsfluid ausschließlich über die Kolbengliedströmungskanäle 11 von dem einen in den anderen Arbeitsraum 6, 7 strömen kann.

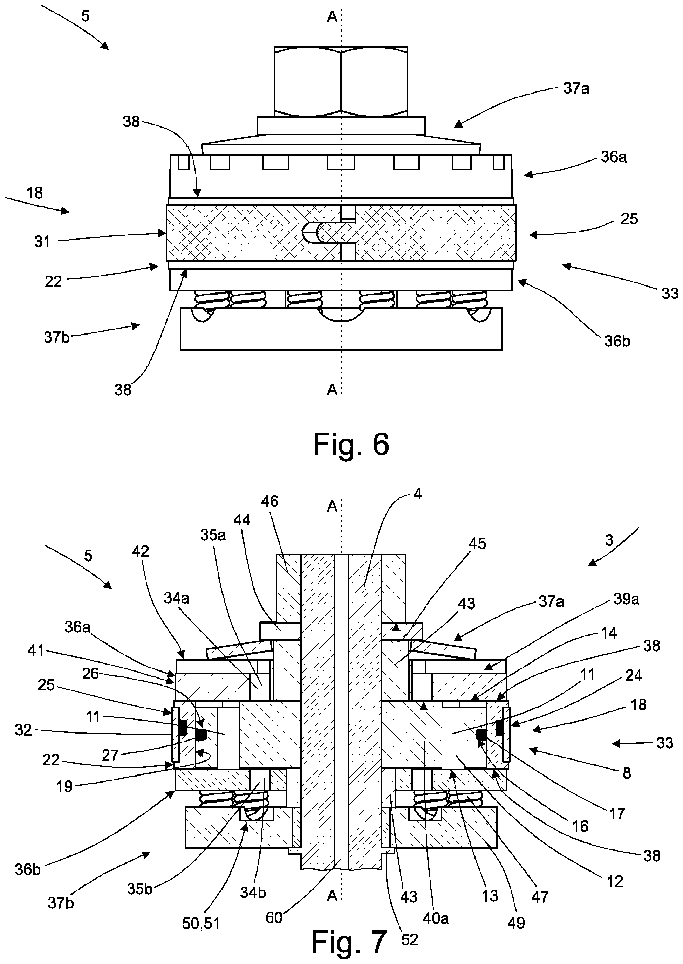

Fig. 6 stellt eine Seitenansicht des zusammengebauten Kolbens 5 der Dämpfereinheit 3 des bevorzugten hydraulischen Stoßdämpfers 1 dar.

Der Kolbendichtring 25 ist im Kolbendichtringaufnahmeraum 28 des Kolbenstützrings 22 angeordnet, sodass der mehrteilig ausgebildete Kolbenring 18, umfassend den Kolbenstützring 22 und den Kolbendichtring 25, koaxial, verschiebbar auf dem nicht abgebildeten Kolbenglied 8 angeordnet ist.

Axial beidseits der Kolbeneinheit 33 ist je eine über Druckplattenströmungskanäle verfügende Druckplatte 36 angeordnet, die durch eine Federkraft eines Federelements 37 federnd gegen die Kolbeneinheit 33, bevorzugt gegen das Kolbenglied 8, vorgespannt ist, sodass die den eine Kolbenringaußenmantelfläche 31 aufweisenden koaxial, verschiebbar auf dem Kolbenglied 8 angeordneten Kolbenring 18 umfassende Kolbeneinheit 33 zwischen den Druckplatten 36 angeordnet ist.

Die Druckplatten 36 sind dabei radial so bemessen, dass eine den Druckplatten 36 jeweils zugewandte Kolbenringstirnfläche 38 radial über die zugeordnete Druckplatte 36 übersteht, derart, dass im Betriebszustand der Kolbenring 18 durch das auf die eine Kolbenringstirnfläche 38 drückende Dämpfungsfluid verschiebbar ist und die jenseitige Druckplatte 36 durch die Verschiebung des Kolbenrings 18 gegen die Federkraft ausgelenkt wird, wodurch durch die Kolbengliedströmungskanäle 11 und die Druckplattenströmungskanäle der jenseitigen Druckplatte 36 hindurch ein Strömungsweg zum gedrosselten Überströmen des Dämpfungsfluids zwischen den beiden Arbeitsräumen 6, 7 freigebbar ist.

Im Ausführungsbeispiel eines zylinderförmigen hydraulischen Stoßdämpfers bildet sich somit zwischen Gehäuse 2 und Druckplatte 36 ein Ringspalt aus, dessen Bodenfläche als ein Teil der Kolbenringstirnfläche 38 ausgebildet ist.

Fig. 7 zeigt eine Darstellung des auf der Kolbenstange 4 angeordneten Kolbens 5 der Dämpfereinheit 3 des bevorzugten hydraulischen Stoßdämpfers 1 gemäß Fig. 6 im Längsschnitt durch eine durch die Dämpfereinheitmittelachse A-A verlaufende Schnittebene B.

Der Kolben 5 weist das eine Vielzahl an zur Verbindung des ersten und des zweiten Arbeitsraums 6, 7 geeigneten Kolbengliedströmungskanälen 11 aufweisendes und bezüglich der Kolbenstange 4 feststehendes Kolbenglied 8 und einen in Achsrichtung der Dämpfereinheitmittelachse A-A verschiebbar koaxial auf dem Kolbenglied 8 angeordneten eine Kolbenringinnenmantelfläche 19 aufweisenden, mehrteiligen Kolbenring 18 auf. Das in der Kolbengliednut 16 angeordnete Kolbenglieddichtungselement 17 dichtet hierbei zwischen dem Kolbenglied 8 und dem Kolbenring 18 ab.

Hierbei umfasst die Kolbeneinheit 33 das Kolbenglied 8 und den Kolbenring 18.

Die Kolbengliedströmungskanäle 11 sind in Form einer Bohrung 12 ausgebildet und weisen einen Kolbengliedströmungskanaleinlassabschnitt 14 und einem Kolbengliedströmungskanalauslassabschnitt 13 auf.

Der Kolbenring 18 ist mehrteilig ausgebildet und umfasst den Kolbenstützring 22 und den Kolbendichtring 25. Zwischen dem Kolbenstützring 22 und den Kolbendichtring 25 ist das Kolbenringdichtungselement 27 angeordnet.

Die Kolbendichtringaußenmantelfläche 24 ist mit dem Dichtungsmaterial 32 beschichtet, das zwischen dem hier nicht gezeigten Gehäuse 2 und dem Kolbendichtring 25 abdichtet.

Axial beidseits der des die Kolbengliedaußenmantelfläche 15 aufweisenden Kolbenglieds 8 umfassenden Kolbeneinheit 33 ist je eine über Druckplattenströmungskanäle verfügende Druckplatte 36 angeordnet, die durch eine Federkraft des Federelements 37 federnd gegen die Kolbeneinheit 33, vorzugsweise jedoch gegen das Kolbenglied 8, vorgespannt ist, sodass der Kolbenring 18 zwischen den Druckplatten angeordnet ist.

Die Druckplatten 36 sind radial so bemessen, dass eine den Druckplatten 36 jeweils zugewandte Kolbenringstirnfläche 38 radial über die zugeordnete Druckplatte 36 übersteht. Hierdurch ist im Betriebszustand der Kolbenring 8 durch das auf die eine Kolbenringstirnfläche 38 drückende Dämpfungsfluid verschiebbar und die jenseitige Druckplatte 36 wird durch die Verschiebung des Kolbenrings 8 gegen die die Federkraft auf die Druckplatten 36 ausübenden Federelemente 37 ausgelenkt. Durch die Kolbengliedströmungskanäle 11 und die Druckplattenströmungskanäle der jenseitigen Druckplatte 36 hindurch wird so ein Strömungsweg zum gedrosselten Überströmen des Dämpfungsfluids zwischen den beiden Arbeitsräumen 6, 7 ausgebildet.

Die Druckplatte 36a verfügt über als Bohrung 34a ausgebildete Druckplattenströmungskanäle 35a die eine einen axialen Druckplattenströmungskanalauslassabschnitt 39a und einen hier nicht gezeigten axialen Druckplattenströmungskanaleinlassabschnitt 40a aufweisen. Der Druckplattenströmungskanalauslassabschnitt 39a ist hierbei zu einer Druckplattenaußenmantelfläche 41 der Druckplatte 36a und einer dem Kolbenglied 8 abgewandten Druckplattenstirnfläche 42 hin geöffnet.

Die Druckplatte 36b verfügt über als Bohrung 34b ausgebildete Druckplattenströmungskanäle 35b.

Der Druckplattenströmungskanal kann in den unterschiedlichsten Formen ausgebildet sein und bspw. auch als eine Druckplattenströmungsnut in der Druckplattenaußenmantelfläche 41 ausbildbar oder ausgebildet sein.

Die Druckplattenströmungskanäle 35a und 35b sind in den Druckplatten 36a und 36b derart angeordnet, dass die Kolbengliedströmungskanäle 11 hinsichtlich der den Druckplatten 36a und 36b zugewandten Kolbengliedstirnflächen 9, 10 abgedichtet sind.

Das Federelement 37 ist mittels Distanzhülse 43 von dem Kolbenglied 8 zur Begrenzung der Vorspannung der Druckplatte 36 beabstandet. Im Ausführungsbeispiel werden zwei unterschiedliche Federelemente 37a und 37b zur Vorspannung der Druckplatten 36a und 36b eingesetzt.

Das Federelement 37a ist als Tellerfeder ausgebildet. Das Federelement 37a wird mittels einer Unterlegscheibe 44 und einer als Anschlag 45 dienender Mutter 46 gegenüber der nicht dargestellten Kolbenstange 4 fixiert.

Das Federelement 37b ist mehrteilig ausgebildet und umfasst im Ausführungsbeispiel zwölf Schraubenfedern 47, eine Distanzhülse 43 und eine hier nicht gezeigte Stützplattenströmungskanäle 48 umfassende Stützplatte 49.

In der Stützplatte 49 sind als Sacklöcher 50 ausgebildete Aufnahmen 51 ausgebildet, die die Schraubenfedern 47 teilweise aufnehmen und relativ zu der Druckplatte 36b positionieren. Die Aufnahmen 51 sind nach Art eines Lochkranzes in Umfangsrichtung um die Dämpfereinheitmittelachse A-A gleichverteilt angeordnet.

Zudem ist in Fig. 7 der die beiden Arbeitsräume 6, 7 verbindende Bypasskanal 60 gezeigt.

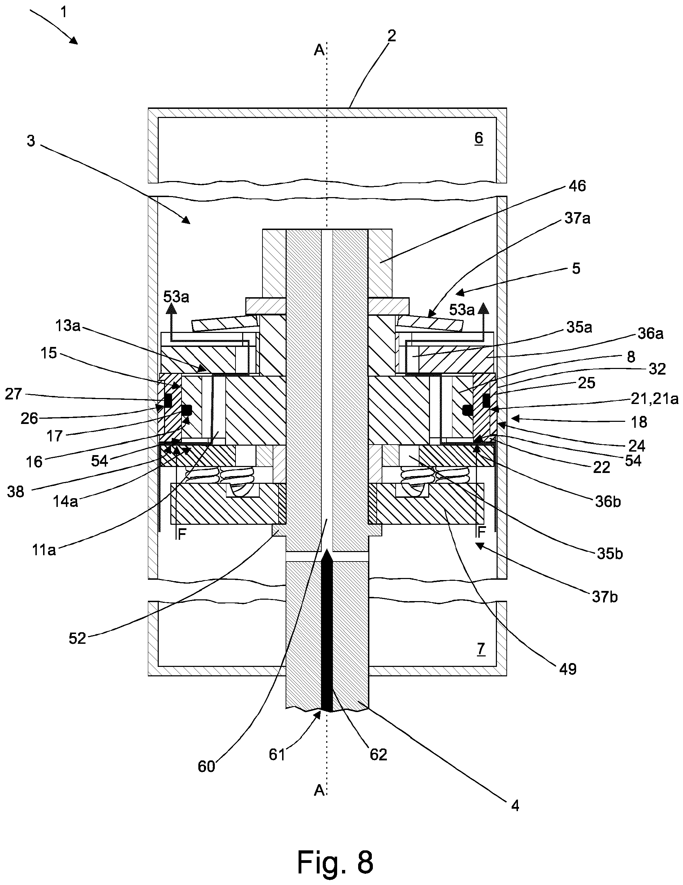

Eine Darstellung des bevorzugten hydraulischen Stoßdämpfers 1 im Längsschnitt durch eine durch die Dämpfereinheitmittelachse A-A verlaufende Schnittebene B mit in Strömungsrichtung eines Dämpfungsfluids markiertem Strömungsweg zwischen dem zweiten Arbeitsraum 7 und dem ersten Arbeitsraum 6 im Betriebszustand ist in Fig. 8 abgebildet.

Die die Kolbenstange 4 und den Kolben 5 umfassende Dämpfereinheit 3 ist in Achsrichtung der Dämpfereinheitmittelachse A-A verschiebbar im Gehäuse 2 des hydraulischen Stoßdämpfers 1 angeordnet. Der Kolben 5 weist das bezüglich der Kolbenstange 4 feststehende Kolbenglied 8 auf. Auf dem Kolbenglied 8 ist koaxial und in Achsrichtung der Dämpfereinheitmittelachse A-A verschiebbar der im Ausführungsbeispiel mehrteilig ausgebildete Kolbenring 18 angeordnet. Zwischen dem Kolbenglied 8 und dem Kolbenring 18 ist in einer auf der Kolbengliedaußenmantelfläche 15 ausgebildeten Kolbengliednut 16 das Kolbendichtungselement 17 angeordnet, das zwischen dem Kolbenglied 8 und dem Kolbenring 18 abdichtet.

Der mehrteilig ausgebildete Kolbenring 18 umfasst im Ausführungsbeispiel der Fig. 8 den Kolbenstützring 22 und den Kolbendichtring 25. Zwischen dem Kolbenstützring 22 und dem Kolbendichtring 25 ist in einer auf der Kolbenstützringaußenmantelfläche 21, genauer auf der inneren Kolbenstützringaußenmantelfläche 21a, ausgebildeten Kolbenringnut 26 das Kolbendichtungselement 27 angeordnet, das zwischen dem Kolbenstützring 22 und dem Kolbendichtring 25 abdichtet.

Die Kolbendichtringaußenumfangsfläche 24 des Kolbendichtrings 25 ist mit Dichtungsmaterial 32, insbesondere PTFE, PFA, FEP, ETFE und/oder PVDF oder dergleichen, beschichtet, sodass zwischen dem Kolbendichtring 25 und dem Gehäuse 2 eine Abdichtung erzeugt wird.

Insbesondere hat der das Kolbenglied 8, den Kolbenring 18 und den Kolbendichtring 25 aufweisende Kolben 5 des hydraulischen Stoßdämpfers 1 eine Doppelfunktion, wobei der Kolben 5 als Schalter zwischen Zug- und Druckstufe und als Führung im Gehäuse 2 des hydraulischen Stoßdämpfers 1 dient.

Insbesondere schaltet der Kolbendichtring 25 aufgrund der Reibungskraft gegenüber einer Innenwandung des Gehäuses 2 schon bevor das Dämpfungsfluid strömt und gibt die jeweiligen Kolbengliedströmungskanäle 11a oder die Kolbengliedströmungskanäle 11b für das Dämpfungsfluid in die entsprechende Achsrichtung frei. Fast gleichzeitig damit wird durch eine durch das Dämpfungsfluid wirkende Kraft auf die Kolbenringstirnfläche 38 des Kolbenrings 18 eine Bewegung des Kolbenrings 18 initiiert, wodurch entweder die Kolbengliedströmungskanäle 11a oder die Kolbengliedströmungskanäle 11b freigegeben werden, sodass hierdurch das gedrosselte Überströmen des Dämpfungsfluids von Arbeitsraum 6 nach Arbeitsraum 7 oder umgekehrt verstärkt wird. Durch den Kolbenring 18 wird die jenseitige Druckplatte 36 ausgelenkt. Bevorzugt sind für das gedrosselte Überströmen des Kolbenglieds 8 des Kolbens 5 in die jeweilige Achsrichtung der Strömung des Dämpfungsfluids verschiedene Kolbengliedströmungskanäle 11a und 11b vorhanden. Die Dämpfung wirkt dem Nachschwingen des Stoßdämpfers entgegen. Fürs Einfedern ist die Druckstufe, fürs Ausfedern die Zugstufe zuständig.

Die das Kolbenglied 8 durchdringenden Kolbengliedströmungskanäle 11 weisen den Kolbengliedströmungskanalauslassabschnitt 13 und den Kolbengliedströmungskanaleinlassabschnitt 14 auf. In Fig. 8 sind die Kolbengliedströmungskanäle 11a dargestellt, die im Betriebszustand einen Strömungsweg freigeben, der eine Strömung des Dämpfungsfluids von dem zweiten Arbeitsraum 7 in den ersten Arbeitsraum 6 ermöglicht.

Kolbenglied 8 und der koaxial, verschiebbar auf dem Kolbenglied 8 angeordnete Kolbenring 18 sind zwischen über Druckplattenströmungskanäle verfügende Druckplatten 36 angeordnet. Die Druckplatten 36 sind hierbei durch eine Federkraft ausübende Federelemente 37 gegen das Kolbenglied 8 vorgespannt. Die Stützplatte 49 des Federelements 37b ist hierbei durch den Anschlag 52 fixiert.

Die auf die Druckplatten 36 wirkende Vorspannung ist durch die Mutter 46 stufenlos einstellbar.

Wird nun durch einen auf den hydraulischen Stoßdämpfer 1 einwirkenden Stoß die Dämpfereinheit 3 in Achsrichtung der Dämpfereinheitmittelachse A-A in Richtung des zweiten Arbeitsraums 7 verschoben, strömt das Dämpfungsfluid vom zweiten Arbeitsraum 7 in den ersten Arbeitsraum 6. Nachfolgend wird der Strömungsweg des Dämpfungsfluids im Kolben 5 dargelegt.

Das Dämpfungsfluid des zweiten Arbeitsraums 7 übt bei einem vorgenannten Stoß auf den hydraulischen Stoßdämpfer 1 eine Kraft auf die Kolbenringstirnfläche 38 aus und verschiebt diese axial in Richtung des Arbeitsraums 6. Das Dämpfungsfluid strömt im Betriebszustand bei einer Verschiebung der die Kolbenstange 4 und den an dieser angeordneten Kolben 5 umfassenden Dämpfereinheit 3 in Achsrichtung der Dämpfereinheitmittelachse A-A Richtung des zweiten Arbeitsraums 7 von diesem in den ersten Arbeitsraum 6.

Im Betriebszustand wird der Kolbenring 18 durch eine Kraft F durch das auf die eine Kolbenringstirnfläche 38 drückende Dämpfungsfluid verschoben und die jenseitige Druckplatte 36a wird durch die Verschiebung des Kolbenrings 18 gegen die Federkraft ausgelenkt, wodurch durch die Kolbengliedströmungskanäle 11a und die Druckplattenströmungskanäle 35a der jenseitigen Druckplatte 36a hindurch ein durch den Pfeil gekennzeichneter Strömungsweg 53a zum gedrosselten Überströmen des Dämpfungsfluids zwischen den beiden Arbeitsräumen 6, 7 freigegeben wird.

Je größer die Kraft F, desto größer die Verschiebung des Kolbenrings 18 gegen die vorgespannte jenseitige Druckplatte 36a. Mit größerer Kraft bildet sich somit auch eine in der Querschnittsfläche größere Einlassfläche 54 auf der Kolbengliedaußenmantelfläche 15 für den Kolbengliedströmungskanaleinlassabschnitt 14a aus. Hierdurch bedingt kann durch die einwirkende größere Kraft F ein größerer Volumenstrom des Dämpfungsfluids durch den Kolbengliedströmungskanal 11a flie-βen. Die Zunahme des Volumenstroms des Dämpfungsfluids ist durch die Kolbengliedströmungskanalquerschnittsfläche limitiert.

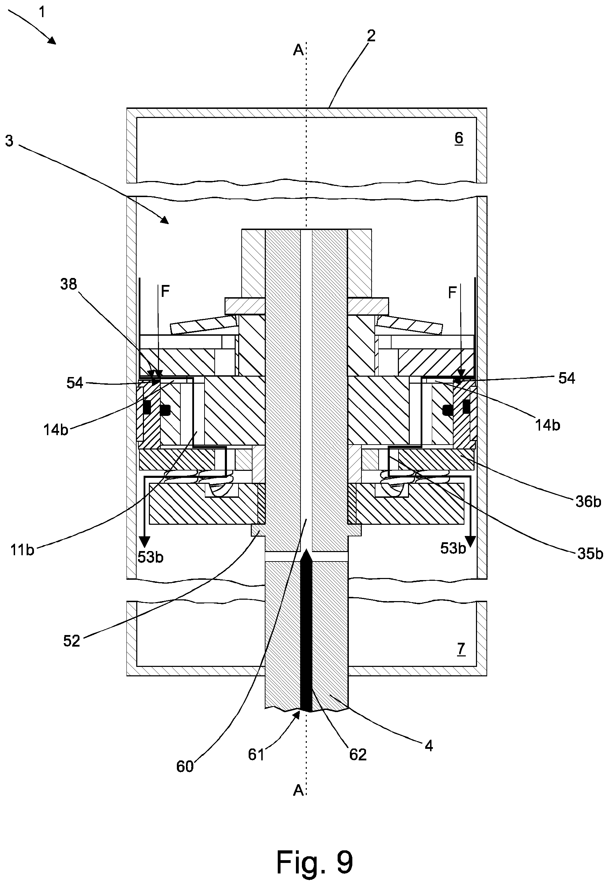

In Fig 9 ist eine Darstellung des bevorzugten hydraulischen Stoßdämpfers 1 im Längsschnitt durch eine durch die Dämpfereinheitmittelachse A-A verlaufende Schnittebene B mit in Strömungsrichtung eines Dämpfungsfluids markiertem Strömungsweg zwischen dem ersten Arbeitsraum 6 und dem zweiten Arbeitsraum 7 im Betriebszustand.

Im Gegensatz zu dem in Fig. 8 abgebildeten Strömungsweg 53a strömt das Dämpfungsfluid im Betriebszustand bei einer Verschiebung der die Kolbenstange 4 und den an dieser angeordneten Kolben 5 umfassenden Dämpfereinheit 3, bspw. aufgrund eines Stoßes auf den hydraulischen Stoßdämpfer 1, in Achsrichtung der Dämpfereinheitmittelachse A-A Richtung des ersten Arbeitsraums 6 von diesem in den zweiten Arbeitsraum 7.

Im Betriebszustand wird der Kolbenring 18 durch eine Kraft F durch das auf die eine Kolbenringstirnfläche 38 drückende Dämpfungsfluid verschoben und die jenseitige Druckplatte 36b wird durch die Verschiebung des Kolbenrings 18 gegen die Federkraft ausgelenkt, wodurch durch die Kolbengliedströmungskanäle 11b und die Druckplattenströmungskanäle 35b der jenseitigen Druckplatte 36b hindurch ein durch den Pfeil gekennzeichneter Strömungsweg 53b zum gedrosselten Überströmen des Dämpfungsfluids zwischen den beiden Arbeitsräumen 6, 7 freigegeben wird.

Je größer die Kraft F, desto größer die Verschiebung des Kolbenrings 18 gegen die vorgespannte jenseitige Druckplatte 36b. Mit größerer Kraft bildet sich somit auch eine in der Querschnittsfläche größere Einlassfläche 54 auf der Kolbengliedaußenmantelfläche 15 für den Kolbengliedströmungskanaleinlassabschnitt 14b aus. Hierdurch bedingt kann durch die einwirkende größere Kraft F ein größerer Volumenstrom des Dämpfungsfluids durch den Kolbengliedströmungskanal 11b flie-ßen. Die Zunahme des Volumenstroms des Dämpfungsfluids ist durch die Kolbengliedströmungskanalquerschnittsfläche limitiert.

Fign. 8 und 9 zeigen des Weiteren einen in der Kolbenstange 4 ausgebildeten Bypasskanal 60 in der Dämpfereinheit 3 des hydraulischen Stoßdämpfers 1. Der Durchfluss des Bypasskanals 60 ist mittels eines Ventils 61, vorzugsweise eines Nadelventils, einstellbar. Ist der in der Kolbenstange 4 angeordnete Bypasskanal 60 geschlossen werden eine degressive Kennlinie und die maximal mögliche Zugdämpfung erreicht. Die Dämpfung erfolgt über die voreingestellten Federelemente 37 und den Durchfluss des Dämpfungsfluids am Kolben 5. Daraus resultiert eine sportlich straffe Abstimmung der Zugstufe, die hilft Wank- und Nickbewegungen des Fahrzeugs zu kontrollieren. Ist der in der Kolbenstange 4 angeordnete Bypasskanal 60 geöffnet, werden eine progressive Kennlinie und die mindestens mögliche Zugdämpfung erreicht. Die durch den Bypasskanal 60 strömende Menge an Dämpfungsfluid steht dem Kolben 5 nicht mehr zur Verfügung und die Dämpferkräfte werden dadurch reduziert. Eine geringe Zugdämpfung erhöht den Fahrkomfort.

Federt der Kolben 5 des hydraulischen Stoßdämpfers 1 ein, wird durch das Eintauchen der Kolbenstange 4 das unter Druck stehende Dämpfungsfluid aus dem Arbeitsraum 6 verdrängt und strömt über die Kolbengliedströmungskanäle 11 in den Arbeitsraum 7 und die vorzugsweise als Rückschlagventil ausgebildete Ventilanordnung 57 in einen Ausgleichsbehälter 56. Im Ausführungsbeispiel ist die Ventilanordnung 57 und der Kolben 5 der Dämpfereinheit 3 baugleich ausgebildet, wobei die Zugstufe keine Federkraft aufweist. Beim Einfedern fließt das Dämpfungsfluid durch die Druckstufe des Kolbens 5 der Dämpfereinheit vom Arbeitsraum 6 in den Arbeitsraum 7 und gleichzeitig durch die Druckstufe der Ventilanordnung 57 in den Ausgleichsbehälter 56. Beim Ausfedern fließt das Dämpfungsfluid durch die Zugstufe der Ventilanordnung 57, die keine oder nur eine minimale Federkraft aufweist, vom Ausgleichsbehälter 56 zurück in den Arbeitsraum 6 und vom Arbeitsraum 6 durch die Zugstufe des Kolbens 5 der Dämpfereinheit 3 zurück in den Arbeitsraum 7.

Durch die Einstellung des jeweiligen Bypasskanals in der Kolbenstange 4 oder in der Ventilanordnung kann das Dämpfungsverhalten weiter vorteilhaft angepasst werden. Durch geschlossene Bypasskanäle wird eine sportlich straffe Abstimmung erreicht und durch geöffnete Bypasskanäle wird der Fahrkomfort erhöht.

## Patentansprüche

1. Hydraulischer Stoßdämpfer (1) umfassend ein Gehäuse (2) und eine Dämpfereinheit (3), wobei die Dämpfereinheit (3) in Achsrichtung einer Dämpfereinheitmittelachse A-A relativ zum Gehäuse (2) beweglich ist und einen an einer Kolbenstange (4) angeordneten Kolben (5) aufweist, der das Gehäuse (2) in einen ersten und einen zweiten mit einem Dämpfungsfluid gefüllten Arbeitsraum (6, 7) unterteilt, **dadurch gekennzeichnet, dass** der Kolben (5) eine ein eine Vielzahl an zur Verbindung des ersten und des zweiten Arbeitsraums (6, 7) geeigneten Kolbengliedströmungskanälen (11) aufweisendes und bezüglich der Kolbenstange (4) feststehendes Kolbenglied (8) und einen in Achsrichtung der Dämpfereinheitmittelachse A-A verschiebbar koaxial auf dem Kolbenglied (8) angeordneten eine Kolbenringinnenmantelfläche (19) aufweisenden Kolbenring (18) umfassende Kolbeneinheit (33) aufweist, wobei axial beidseits der des eine Kolbengliedaußenmantelfläche (15) aufweisenden Kolbenglieds (8) umfassenden Kolbeneinheit (33) je eine über Druckplattenströmungskanäle verfügende Druckplatte (36) angeordnet ist, die durch eine Federkraft federnd gegen die Kolbeneinheit (33) vorgespannt ist, sodass der eine Kolbenringaußenmantelfläche (31) aufweisende Kolbenring (18) zwischen den Druckplatten (36) angeordnet ist, und wobei die Druckplatten (36) radial so bemessen sind, dass eine den Druckplatten (36) jeweils zugewandte Kolbenringstirnfläche (38) radial über die zugeordnete Druckplatte (36) übersteht, derart, dass im Betriebszustand der Kolbenring (18) der Kolbeneinheit (33) durch das auf die eine Kolbenringstirnfläche (38) drückende Dämpfungsfluid verschiebbar ist und die jenseitige Druckplatte (36) durch die Verschiebung des Kolbenrings (18) gegen die Federkraft ausgelenkt wird, wodurch durch die Kolbengliedströmungskanäle (11) und die Druckplattenströmungskanäle der jenseitigen Druckplatte (36) hindurch ein Strömungsweg zum gedrosselten Überströmen des Dämpfungsfluids zwischen den beiden Arbeitsräumen (6, 7) freigebbar ist.

2. Hydraulischer Stoßdämpfer (1) nach Anspruch 1, **dadurch gekennzeichnet, dass** axial beidseits der des eine Kolbengliedaußenmantelfläche (15) aufweisenden Kolbenglieds (8) umfassenden Kolbeneinheit (33) je eine über Druckplattenströmungskanäle verfügende Druckplatte (36) angeordnet ist, die durch eine Federkraft federnd gegen das Kolbenglied (8) vorgespannt ist.

3. Hydraulischer Stoßdämpfer (1) nach Anspruch 1 oder 2, **dadurch gekennzeichnet, dass** Kolbenglied (8) und Kolbenring (18) aus unterschiedlichen Materialien hergestellt sind und/oder dass der Kolbenring (18) mehrteilig ausbildbar oder ausgebildet ist.

4. Hydraulischer Stoßdämpfer (1) nach einem der vorhergehenden Ansprüche, **dadurch gekennzeichnet, dass** der Kolbenring (18) einen eine Kolbenstützringinnenmantelfläche (20) und eine Kolbenstützringaußenmantelfläche (21) aufweisenden Kolbenstützring (22) und einen eine Kolbendichtringinnenmantelfläche (23) und eine Kolbendichtringaußenmantelfläche (24) aufweisenden Kolbendichtring (25) aufweist, wobei zweckmäßigerweise in einer in der Kolbenstützringaußenmantelfläche (21) oder in der Kolbendichtringinnenmantelfläche (23) ausgebildeten Kolbenringnut (26) ein Kolbenringdichtungselement (27) zur Abdichtung zwischen Kolbenstützring (22) und Kolbendichtring (25) anordenbar oder angeordnet ist.

5. Hydraulischer Stoßdämpfer (1) nach Anspruch 4, **dadurch gekennzeichnet, dass** eine innere Kolbenstützringaußenmantelfläche (21a) gegenüber einer äußeren Kolbenstützringaußenmantelfläche (21b) zurückversetzt ausgebildet ist, sodass sich ein Kolbendichtringaufnahmeraum (28) aufspannt, in dem der Kolbendichtring (25) anordenbar oder angeordnet ist, wobei zweckmäßigerweise der Kolbendichtring (25) eine Wand (30) aufweist, wobei die Wand (30) eine Wandstärke (29) besitzt, sodass der Kolbenring (18) durch die zueinander angeordnete äußere Kolbenstützringaußenmantelfläche (21b) und die Kolbendichtringaußenmantelfläche (24) eine ebene Kolbenringaußenmantelfläche (31) ausbildet.

6. Hydraulischer Stoßdämpfer (1) nach einem der Ansprüche 4 oder 5, **dadurch gekennzeichnet, dass** die Kolbendichtringaußenmantelfläche (24) zur Abdichtung gegenüber dem Gehäuse (2) mit einem Dichtungsmaterial (32) beschichtet ist.

7. Hydraulischer Stoßdämpfer (1) nach einem der vorhergehenden Ansprüche, **dadurch gekennzeichnet, dass** eine in der Kolbengliedaußenmantelfläche (15) oder in der Kolbenringinnenmantelfläche (19) ausgebildete Kolbengliednut (16) ein Kolbenglieddichtungselement (17) zur Abdichtung zwischen Kolbenglied (8) und Kolbenring (18) angeordnet ist.

8. Hydraulischer Stoßdämpfer (1) nach einem der Ansprüche 4 bis 7, **dadurch gekennzeichnet, dass** in der Kolbengliedaußenmantelfläche (15) oder in der Kolbenstützringinnenmantelfläche (20) ausgebildeten Kolbengliednut (16) ein Kolbenglieddichtungselement (17) zur Abdichtung zwischen Kolbenglied (8) und Kolbenstützring (18) angeordnet ist.

9. Hydraulischer Stoßdämpfer (1) nach einem der vorhergehenden Ansprüche, **dadurch gekennzeichnet, dass** die Kolbengliedströmungskanäle (11) in Umfangsrichtung um die Dämpfereinheitmittelachse A-A gleichverteilt angeordnet sind und/oder dass die Kolbengliedströmungskanäle (11) als Bohrung (12) ausgebildet sind.

10. Hydraulischer Stoßdämpfer (1) nach einem der vorhergehenden Ansprüche, **dadurch gekennzeichnet, dass** die Druckplattenströmungskanälen in Umfangsrichtung um die Dämpfereinheitmittelachse A-A gleichverteilt angeordnet sind und/oder dass die Druckplattenströmungskanäle als Bohrung (34) ausgebildet sind.

11. Hydraulischer Stoßdämpfer (1) nach einem der vorhergehenden Ansprüche, **dadurch gekennzeichnet, dass** die Druckplatten (36) mittels Federelementen (37) federnd gegen die Kolbeneinheit (33), vorzugsweise das Kolbenglied (8), vorgespannt sind, wobei zweckmäßigerweise die Federelemente (37) als Druckfeder, Flachfeder und/oder Wellenfeder ausgebildet sind.

12. Hydraulischer Stoßdämpfer (1) nach Anspruch 11, **dadurch gekennzeichnet, dass** das Federelement (37) mittels Distanzhülse (43) von dem Kolbenglied (8) zur Begrenzung der Vorspannung der Druckplatte (36) beabstandet ist.

13. Hydraulischer Stoßdämpfer (1) nach einem der vorhergehenden Ansprüche, **dadurch gekennzeichnet, dass** der Kolbenring (18) axiales Spiel zwischen den Druckplatten (36) aufweist, wobei zweckmäßigerweise das axiale Spiel zwischen den Druckplatten (36) bis zu 1 mm, bevorzugt zwischen 1/100 mm und 5/10 mm, besonders bevorzugt zwischen 1/100 mm und 1/10 mm, beträgt.

14. Hydraulischer Stoßdämpfer (1) nach einem der vorhergehenden Ansprüche, **dadurch gekennzeichnet, dass** das Kolbenglied (8) für den Strömungsweg zum gedrosselten Überströmen des Dämpfungsfluids in einer Strömungsrichtung zwischen den beiden Arbeitsräumen (6, 7) baulich voneinander getrennte Kolbengliedströmungskanäle (11) aufweist und/oder die Kolbengliedströmungskanäle (11) einen axialen Kolbengliedströmungskanalauslassabschnitt (13) und einen axialen Kolbengliedströmungskanaleinlassabschnitt (14) aufweisen, wobei der Kolbengliedströmungskanaleinlassabschnitt (14) zur Kolbengliedaußenmantelfläche (15) hin geöffnet ist.

15. Hydraulischer Stoßdämpfer (1) nach einem der vorhergehenden Ansprüche, **dadurch gekennzeichnet, dass** ein Kolbengliedströmungskanal (11) als Kolbengliedströmungsnut in der Kolbengliedaußenmantelfläche (15) ausbildbar oder ausgebildet ist und/oder dass die Druckplattenströmungskanäle eine einen axialen Druckplattenströmungskanalauslassabschnitt (39) und einen axialen Druckplattenströmungskanaleinlassabschnitt (40) aufweisen, wobei der Druckplattenströmungskanalauslassabschnitt (39) zu einer Druckplattenaußenmantelfläche (41) hin geöffnet ist.

## Claims

1. A hydraulic shock absorber (1) comprising a housing (2) and an absorber unit (3), wherein the absorber unit (3) is movable relative to the housing (2) in the axis direction of an absorber unit middle axis A-A and comprises a piston (5) which is arranged on a piston rod (4) and which subdivides the housing (2) into a first and a second working space (6, 7) which is filled with damping fluid, **characterized in that** the piston (5) has a piston unit (33) which comprises a piston member (8), said piston member (8) comprising a multitude of piston member flow channels (11) which are suitable for the connection of the first and second working space (6, 7) and being stationary with respect to the piston rod (4), and a piston ring (18), said piston ring (18) being coaxially arranged on the piston member (8) in a displaceable manner in the axis direction of the absorber unit middle axis A-A and comprising a piston ring inner lateral surface (19), wherein a pressure plate (36) which comprises pressure plate flow channels is arranged axially on both sides of the piston unit (33), said piston unit (33) comprising the piston member (8) which has a piston member outer lateral surface (15), and is resiliently biased against the piston unit (33) by way of a spring force, so that the piston ring (18) which comprises a piston ring outer lateral surface (31) is arranged between the pressure plates (36), and wherein the pressure plates (36) are radially dimensioned such that a piston ring end-face (38) which faces the pressure plates (36) projects radially beyond the assigned pressure plate (36) in a manner such that in the operating state the piston ring (18) of the piston unit (33) is displaceable by the damping fluid which presses upon the one piston ring end-face (38) and the pressure plate (36) on the other side is deflected against the spring force by way of the displacement of the piston ring (18), by which means a flow path through the piston member flow channels (11) and the pressure plate flow channels of the pressure plate (36) on the other side can be released for the throttled flow of the damping fluid between the two workings spaces (6, 7).

2. The hydraulic shock absorber (1) according to claim 1, **characterized in that** a pressure plate (36) which comprises pressure plate flow channels and which is resiliently biased against the piston member (8) by way of a spring force is arranged axially on both sides of the piston unit (33), said piston unit (33) comprising the piston member (8) which has a piston member outer lateral surface (15).

3. The hydraulic shock absorber (1) according to claim 1 or 2, **characterized in that** the piston member (8) and the piston ring (18) are manufactured of different materials and/or that the piston ring (18) can be designed or is designed in a multi-part manner.

4. The hydraulic shock absorber (1) according to any one of the preceding claims, **characterized in that** the piston ring (18) comprises a piston support ring (22) which has a piston support ring inner lateral surface (20) and a piston support ring outer lateral surface (21), and a piston sealing ring (25) which has a piston sealing ring inner lateral surface (23) and a piston sealing ring outer lateral surface (24), wherein expediently a piston ring seal element (27) for sealing between the piston support ring (22) and the piston sealing ring (25) is arranged or can be arranged in a piston ring groove (26) which is formed in the piston support ring outer lateral surface (21) or in the piston sealing ring inner lateral surface (23).

5. The hydraulic shock absorber (1) according to claim 4, wherein an inner piston support ring outer lateral surface (21a) is designed in a manner set back with respect to an outer piston support ring outer lateral surface (21b), so that a piston sealing ring receiver space (28) opens out, in which space the piston sealing ring (25) can be arranged or is arranged, wherein expediently the piston sealing ring (25) comprise a wall (39), wherein the wall (30) has a wall thickness (29), so that the piston ring (18) forms a plane piston ring outer lateral surface (31) by way of the outer piston support ring outer lateral surface (21b) and the piston sealing ring outer lateral surface (24) which are arranged to one another.

6. The hydraulic shock absorber (1) according to claim 4 or 5, **characterized in that** the piston sealing ring outer lateral surface (24) is coated with a sealing material (32) for sealing with respect to the housing (2).

7. The hydraulic shock absorber (1) according to any one of the preceding claims, **characterized in that** a piston member seal element (17) for sealing between the piston member (8) and the piston ring (18) is arranged in a piston member groove (16) which is formed in the piston member outer lateral surface (15) or in the piston ring inner lateral surface (19).

8. The hydraulic shock absorber (1) according to any one of the claims 4 to 7, **characterized in that** a piston member seal element (17) for sealing between the piston member (8) and the piston support ring (18) is arranged in a piston member groove (16) which is formed in the piston member outer lateral surface (15) or in the piston support ring inner lateral surface (20).

9. The hydraulic shock absorber (1) according to any one of the preceding claims, **characterised in that** the piston member flows channels (11) are arranged in an equally distributed manner in the circumferential direction about the absorber unit middle axis A-A and/or that the piston member flow channels (11) are designed as a bore (12).

10. The hydraulic shock absorber (1) according to any one of the preceding claims, **characterized in that** the pressure plate flow channels are arranged in an equally distributed manner in the circumferential direction about the absorber unit middle axis A-A and/or that the pressure plate flow channels are designed as a bore (34).

11. The hydraulic shock absorber (1) according to any one of the preceding claims, **characterized in that** the pressure plates (36) are resiliently biased against the piston unit (33), in particular the piston member (8), by way of spring elements (37), wherein expediently the spring elements (37) are designed as compression springs, flat springs and/or corrugated springs.

12. The hydraulic shock absorber (1) according to claim 11, **characterized in that** the spring element (37) is distanced to the piston member (8) by way of a spacer sleeve (43), for limiting the biasing of the pressure plate (36).

13. The hydraulic shock absorber (1) according to any one of the preceding claims, **characterized in that** the piston ring (18) has an axial play between the pressure plates (36), wherein expediently the axial play between the pressure plates (36) is up to 1 mm, preferably between 1/100 mm and 5/10 mm, particularly preferred between 1/100 mm and 1/10 mm.

14. The hydraulic shock absorber (1) according to any one of the preceding claims, **characterized in that** the piston member (8) comprises piston member flow channels (11) which are constructionally separate from one another, for the flow path for the throttled flow of the damping fluid in a flow direction between the two working spaces (6, 7) and/or the piston member flow channels (11) comprise an axial piston member flow channel outlet section (13) and an axial piston member flow channel inlet section (14) , wherein the piston member flow channel inlet section (14) is open towards the piston member outer lateral surface (15).

15. The hydraulic shock absorber (1) according to any one of the preceding claims, **characterized in that** a piston member flow channel (11) can be designed or is designed as a piston member flow groove in the piston member outer lateral surface (15) and/or that the pressure plate flow channels comprise an axial pressure plate flow channel outlet section (39) and an axial pressure plate flow channel inlet section (40), wherein the pressure plate flow channel outlet section (40) is open towards a pressure plate outer lateral surface (41).

## Revendications

1. Amortisseur hydraulique (1) comprenant un boîtier (2) et une unité d'amortissement (3), dans lequel l'unité d'amortissement (3) est mobile dans la direction axiale d'un axe médian d'unité d'amortissement A-A par rapport au boîtier (2) et présente un piston (5) disposé sur une tige de piston (4), qui subdivise le boîtier (2) en une première et une deuxième chambre de travail (6, 7) remplie d'un fluide de refroidissement, **caractérisé en ce que** le piston (5) présente une unité de piston (33) comprenant un organe de piston (8) présentant une pluralité de canaux d'écoulement d'organe de piston (11) adaptés à la liaison de la première et de la deuxième chambre de travail (6, 7) et fixe par rapport à la tige de piston (4) et un segment de piston (18) disposé dans la direction axiale de l'axe médian d'unité d'amortissement A-A de manière à pouvoir se déplacer de façon coaxiale sur l'organe de piston (8), présentant une surface d'enveloppe intérieure de segment de piston (19), dans lequel respectivement un plateau de pression (36) respectif disposant de canaux d'écoulement de plateau de pression est disposé axialement des deux côtés de l'unité de piston (33) comprenant l'organe de piston (8) présentant une surface d'enveloppe extérieure d'organe de piston (15), qui est précontraint de manière élastique contre l'unité de piston (33) par une force de ressort, de sorte que le segment de piston (18) présentant une surface d'enveloppe extérieure de segment de piston (31) est disposé entre les plateaux de pression (36), et dans lequel les plateaux de pression (36) sont dimensionnés radialement, de sorte qu'une surface frontale de segment de piston (38) respectivement tournée vers les plateaux de pression (36) fait saillie radialement du plateau de pression (36) associé, de telle sorte que dans l'état de fonctionnement le segment de piston (18) de l'unité de piston (33) peut être déplacé par le fluide d'amortissement pressant sur les surfaces frontales de segment de piston (38) et le plateau de pression (36) de l'autre côté est dévié contre la force de ressort par le déplacement du segment de piston (18), ce qui a pour effet qu'une voie d'écoulement pour le débordement étranglé du fluide d'amortissement entre les deux chambres de travail (6, 7) peut être libérée à travers les canaux d'écoulement d'organe de piston (11) et les canaux d'écoulement de plateau de pression du plateau de pression (36) de l'autre côté.

2. Amortisseur hydraulique (1) selon la revendication 1, **caractérisé en ce qu'**un plateau de pression (36) respectif disposant de canaux d'écoulement de plateau de pression est disposé axialement des deux côtés de l'unité de piston (33) comprenant l'organe de piston (8) présentant une surface d'enveloppe extérieure d'organe de piston (15), qui est précontraint de manière élastique contre l'organe de piston (8) par une force de ressort.

3. Amortisseur hydraulique (1) selon la revendication 1 ou 2, **caractérisé en ce que** l'organe de piston (8) et le segment de piston (18) sont fabriqués à partir de différents matériaux et/ou que le segment de piston (18) peut être réalisé ou est réalisé en plusieurs parties.

4. Amortisseur hydraulique (1) selon l'une quelconque des revendications précédentes, **caractérisé en ce que** le segment de piston (18) présente un segment d'appui de piston (22) présentant une surface d'enveloppe intérieure de segment d'appui de piston (20) et une surface d'enveloppe extérieure de segment d'appui de piston (21) et un segment d'étanchéité de piston (25) présentant une surface d'enveloppe intérieure de segment d'étanchéité de piston (23) et une surface d'enveloppe extérieure de segment d'étanchéité de piston (24), dans lequel un élément d'étanchéité de segment de piston (27) pour l'étanchéité entre le segment d'appui de piston (22) et le segment d'étanchéité de piston (25) peut être disposé ou est disposé avantageusement dans une rainure de segment de piston (26) réalisée dans la surface d'enveloppe extérieure de segment d'appui de piston (21) ou dans la surface d'enveloppe intérieure de segment d'étanchéité de piston (23).

5. Amortisseur hydraulique (1) selon la revendication 4, **caractérisé en ce qu'**une surface d'enveloppe extérieure de segment d'appui de piston intérieure (21a) est réalisée en retrait par rapport à une surface d'enveloppe extérieure de segment d'appui de piston extérieure (21b), de sorte qu'un espace de réception de segment d'étanchéité de piston (28) se tend, dans lequel le segment d'étanchéité de piston (25) peut être disposé ou est disposé, dans lequel avantageusement le segment d'étanchéité de piston (25) présente une paroi (30), dans lequel la paroi (30) possède une épaisseur de paroi (29), de sorte que le segment de piston (18) du fait de la surface d'enveloppe extérieure de segment d'appui de piston extérieure (21b) et de la surface d'enveloppe extérieure de segment d'étanchéité de piston (24) disposées l'un par rapport à l'autre réalise une surface d'enveloppe extérieure de segment de piston (31) plane.

6. Amortisseur hydraulique (1) selon l'une quelconque des revendications 4 ou 5, **caractérisé en ce que** la surface d'enveloppe extérieure de segment d'étanchéité de piston (24) est revêtue d'un matériau d'étanchéité (32) pour l'étanchéité par rapport au boîtier (2).

7. Amortisseur hydraulique (1) selon l'une quelconque des revendications précédentes, **caractérisé en ce qu'**un élément d'étanchéité d'organe de piston (17) pour l'étanchéité entre l'organe de piston (8) et le segment de piston (18) est disposé dans une rainure d'organe de piston (16) réalisée dans la surface d'enveloppe extérieure d'organe de piston (15) ou dans la surface d'enveloppe intérieure de segment de piston (19).

8. Amortisseur hydraulique (1) selon l'une quelconque des revendications 4 bis 7, **caractérisé en ce qu'**un élément d'étanchéité d'organe de piston (17) pour l'étanchéité entre l'organe de piston (8) et le segment d'appui de piston (18) est disposé dans une rainure d'organe de piston (16) réalisée dans la surface d'enveloppe extérieure d'organe de piston (15) ou dans la surface d'enveloppe intérieure de segment d'appui de piston (20).

9. Amortisseur hydraulique (1) selon l'une quelconque des revendications précédentes, **caractérisé en ce que** les canaux d'écoulement d'organe de piston (11) sont disposés de manière équirépartie autour de l'axe médian d'unité d'amortissement A-A dans la direction périphérique et/ou que les canaux d'écoulement d'organe de piston (11) sont réalisés en tant que trou (12).

10. Amortisseur hydraulique (1) selon l'une quelconque des revendications précédentes, **caractérisé en ce que** les canaux d'écoulement de plateau de pression sont disposés de manière équirépartie autour de l'axe médian d'unité d'amortissement A-A dans la direction périphérique et/ou que les canaux d'écoulement de plateau de pression sont réalisés en tant que trou (34).

11. Amortisseur hydraulique (1) selon l'une quelconque des revendications précédentes, **caractérisé en ce que** les plateaux de pression (36) sont précontraints au moyen d'éléments ressorts (37) de manière élastique contre l'unité de piston (33), de préférence l'organe de piston (8), dans lequel avantageusement les éléments ressorts (37) sont réalisés en tant que ressorts de pression, ressorts plats et/ou ressorts ondulés.

12. Amortisseur hydraulique (1) selon la revendication 11, **caractérisé en ce que** l'élément ressort (37) est espacé de l'organe de piston (8) au moyen d'une douille d'écartement (43) pour la limitation de la précontrainte du plateau de pression (36).

13. Amortisseur hydraulique (1) selon l'une quelconque des revendications précédentes, **caractérisé en ce que** le segment de piston (18) présente un jeu axial entre les plateaux de pression (36), dans lequel avantageusement le jeu axial entre les plateaux de pression (36) atteint jusqu'à 1 mm, de préférence est compris entre 1/100 mm et 5/10 mm, de manière particulièrement préférée entre 1/100 mm et 1/10 mm.

14. Amortisseur hydraulique (1) selon l'une quelconque des revendications précédentes, **caractérisé en ce que** l'organe de piston (8) présente pour la voie d'écoulement pour le débordement du fluide de refroidissement étranglé des canaux d'écoulement d'organe de piston (11) séparés les uns des autres du point de vue structural dans une direction d'écoulement entre les deux chambres de travail (6, 7) et/ou les canaux d'écoulement d'organe de piston (11) présentent une section de sortie de canal d'écoulement d'organe de piston (13) axiale et une section d'entrée de canal d'écoulement d'organe de piston (14) axiale, dans lequel la section d'entrée de canal d'écoulement d'organe de piston (14) est ouverte en direction de la surface d'enveloppe extérieure d'organe de piston (15).

15. Amortisseur hydraulique (1) selon l'une quelconque des revendications précédentes, **caractérisé en ce qu'**un canal d'écoulement d'organe de piston (11) peut être réalisé ou est réalisé en tant que rainure d'écoulement d'organe de piston dans la surface d'enveloppe extérieure d'organe de piston (15) et/ou que les canaux d'écoulement de plateau de pression présentent une section de sortie de canal d'écoulement de plateau de pression (39) axiale et une section d'entrée de canal d'écoulement de plateau de pression (40) axiale, dans lequel la section de sortie de canal d'écoulement de plateau de pression (39) est ouverte en direction d'une surface d'enveloppe extérieure de plateau de pression (41).
